# EUROPEAN PATENT APPLICATION

(11) **EP 4 286 696 A1**
(43) Date of publication of application: **06.12.2023**
(21) Application number: 23171333.0
(22) Date of filing: 03.05.2023
(51) Int. Cl.: F16B 5/06, F16B 21/02, F16B 5/02, F16B 5/10

(54) **CONCEALED FASTENING SYSTEMS**

(30) Priority: 01.06.2022 US 202263347694 P; 12.10.2022 US 202263415440 P; 06.02.2023 US 202363483313 P; 25.04.2023 US 202318138890
(71) Applicant: Apple Inc., Cupertino, CA 95014 (US)
(72) Inventor: RAFF, Nathan J., Cupertino, California, 95014 (US); KLOTZ, Steven H., Cupertino, California, 95014 (US); TARGHI, Ali Tavakoli, Cupertino, California, 95014 (US); SULTANA, Trevor M., Cupertino, California, 95014 (US); RAMCHANDER, Uday, Cupertino, California, 95014 (US); BAUM, Moshe J., Cupertino, California, 95014 (US); WANG, Lei, Cupertino, California, 95014 (US)
(74) Representative: Simmons & Simmons

(57) **Abstract**

A fastener (100) for securing a first component (102) to a second component (104) includes a fastener head (112) disposed at a distal end of a fastener body (114). The fastener has a first configuration with the fastener head inset within a first opening (106) of the first component. The fastener has a second configuration with the fastener body extending through the first opening in the first component and through a second opening (108) in the second component. An inner surface of the fastener head engages with an inner surface of the second component to secure the second component to the first component in the second configuration.

## Description

### CROSS-REFERENCE TO RELATED APPLICATIONS

This application claims priority to U.S Patent Application Serial No. 18/138,890, filed April 25, 2023, U.S. Provisional Application Serial No. 63/483,313, filed February 6, 2023, U.S. Provisional Application Serial No. 63/415,440, filed October 12, 2022, and U.S. Provisional Application Serial No. 63/347,694, filed June 1, 2022,the contents of which are incorporated herein by reference.

### FIELD

The present disclosure relates generally to the field of fastening systems and specifically to concealed fastening systems.

### BACKGROUND

Fastening systems that latch components together, such as a door to a door opening, a tailgate to a bed opening, or a liftgate to a hatch opening, often include a fastening mechanism where a hook or jaw attaches to a striker or loop to join the components. The hook or jaw can be configured to open when contacting the striker or loop, then close around the striker or loop to complete the fastening feature. The striker or loop may be a protruding, heavy gauge wire extending from one of the components. For example, a c-shaped or a u-shaped configuration is common. The hook or jaw may be configured to capture the striker or loop based on a manual force from a user pushing the components together (e.g., closing a door, a tailgate, or a liftgate). The hook or jaw may be configured to release the striker or loop based on an external input, such as based on an unlock command from a lock-release mechanism associated with a door, a tailgate, or a liftgate. This type of fastening system includes exposed, protruding mechanical parts that may interfere with objects or persons passing through the door, bed, or hatch openings.

### SUMMARY

A first aspect of the disclosure is a fastener for securing a first component to a second component. The fastener includes a fastener head disposed at a distal end of a fastener body. The fastener has a first configuration where the fastener head is inset within a first opening of the first component. The fastener has a second configuration where the fastener body extends through the first opening in the first component and through a second opening in the second component. An inner surface of the fastener head engages with an inner surface of the second component to secure the second component to the first component in the second configuration.

In the first aspect, the fastener may include a first cam follower extending from the fastener body, a second cam follower extending from the fastener body, and a guide including a first cam defining a first guide path configured to direct motion of the first cam follower and a second cam defining a second guide path configured to direct motion of the second cam follower. The first cam and the second cam may be concentric and radially spaced about an axis extending through the fastener body. The fastener may include a motor configured to translate and rotate the fastener along and about an axis extending through the fastener body to move the fastener between the first and second configurations. The motor may rotate in a single direction to move the fastener between the first and second configurations. The fastener head may be in a first orientation when the fastener is in the first configuration, and the fastener head may be in a second orientation that is rotated about an axis with respect to the first orientation when the fastener is in the second configuration. The fastener may include a guide disposed radially about the fastener body and a pin extending from the fastener body and configured to follow the guide to move the fastener between the first and second configurations. The fastener head may be configured to expand in size to move the fastener from the first configuration to the second configuration. The second opening may be configured to reduce in size to secure the second component to the first component in the second configuration. The first opening, the second opening, and the fastener head may have corresponding elongated shapes with the fastener head being sized to pass through the first opening and the second opening. An outer surface of the fastener head may be flush with an outer surface of the first component in the first configuration. The inner surface of the fastener head may be in direct contact with the inner surface of the second component in the second configuration. A seal may be compressed between the inner surface of the fastener head and the inner surface of the second component in the second configuration. When the fastener is in the first configuration, the second opening may be obscured by a cover of the second component, and the cover may be configured to allow the fastener to pass through the second opening when the fastener is in the second configuration. Various features of the first aspect may be implemented alone in combination with other features of the first aspect.

A second aspect of the disclosure is a fastening system for securing first and second components having first and second openings. The fastening system includes a first fastener having a first fastener head disposed at a distal end of a first fastener body. The first fastener has a first configuration where the first fastener head is inset within the first opening of the first component, and the first fastener has a second configuration where the first fastener body extends through the first and second openings and an inner surface of the first fastener head engages with an inner surface of the second component to secure the first and second components. The fastening system includes a second fastener having a second fastener head disposed at a distal end of a second fastener body. The second fastener has a first configuration where the second fastener head is inset within the second opening of the second component and a second configuration with the second fastener head disposed within an interior of the second component. The fastening system includes a spring configured to apply force to the second fastener body to position the second fastener head within the second opening in the first configuration of the second fastener and engage the second fastener head against the first fastener head in the second configuration of the second fastener.

In the second aspect, the first fastener head may be configured to engage the second fastener head and compress the spring in the second configuration of the first fastener. An outer surface of the second fastener head may be flush with an outer surface of the second component in the first configuration of the second fastener. The fastening system may include a motor configured to translate and rotate the first fastener along and about an axis extending through the first fastener body to move the first fastener between the first and second configurations of the first fastener. The motor may rotate in a single direction to move the first fastener between the first and second configurations of the first fastener. The fastening system may include a cam defining a guide path radially spaced from an axis extending through the first fastener body and a cam follower extending from and approximately perpendicular to the first fastener body, the cam follower configured to travel the guide path. The cam may be a first cam, the guide path may be a first guide path, and the cam follower may be a first cam follower. The fastening system may include a second cam defining a second guide path radially spaced from the first guide path and a second cam follower extending from and approximately perpendicular to the first fastener body, the second cam follower configured to travel the second guide path. The first fastener body, the first guide path, and the second guide path may be concentric with respect to the axis extending through the first fastener body. Various features of the second aspect may be implemented alone in combination with other features of the second aspect.

A third aspect of the disclosure is a fastening system for securing first and second components. The fastening system includes first and second fasteners with respective first and second fastener heads disposed at distal ends of respective first and second fastener bodies. The first and second fasteners have respective first configurations where the first and second fastener heads are inset within respective first and second openings in the first and second components. The first fastener has a second configuration where the first fastener body extends through the first and second openings and an inner surface of the first fastener head engages with an inner surface of the second component to secure the first and second components. The second fastener has a second configuration where an outer surface of the second fastener head is engaged by an outer surface of the first fastener head within an interior of the second component. The fastening system includes a motor assembly configured to move the first fastener between the first and second configurations of the first fastener.

In the third aspect, the motor assembly may include a motor configured to translate and rotate the first fastener between the first and second configurations of the first fastener. The motor assembly may include a first motor configured to translate and rotate the first fastener between the first and second configurations of the first fastener and a second motor configured to translate and rotate the second fastener between the first and second configurations of the second fastener. The fastening system may include a spring configured to apply force to the second fastener body and position the second fastener head within the second opening in the first configuration of the second fastener. The first fastener may be configured to apply force to the second fastener to compress the spring and to translate the second fastener between the first and second configurations of the second fastener. The respective outer surfaces of the first and second fastener heads may be flush with respective outer surfaces of the first and second components in the respective first configurations. The fastening system may further include a guide configured to direct the first fastener between the first and second configurations of the first fastener. The guide may define a guide path for travel of a pin extending from the first fastener body. The guide may include first and second cams defining first and second guide paths through which first and second cam followers travel. The first and second guide paths may be radially spaced from an axis extending through the first fastener body, and the first and second cam followers may extend approximately perpendicularly from the first fastener body. A seal may be compressed between an inner surface of the first fastener head and the inner surface of the second component when the first fastener is in the second configuration. Various features of the third aspect may be implemented alone in combination with other features of the third aspect.

A fourth aspect of the disclosure is a fastening system including a fastener having a fastener head disposed at a distal end of a fastener body, a driving unit including a motor configured to rotate a pin about a drive axis, and a slider having a first end coupled to and rotatable about the pin and a second end coupled to and rotatable about a proximal end of the fastener body. When the pin rotates about the drive axis, the slider imparts a force against the fastener body that translates the fastener body along a fastener axis that extends perpendicular to the drive axis. The fastener has a stowed configuration where the fastener head is inset within an opening of a component in a first orientation and an extended configuration where the fastener body extends through the opening in the component and where the fastener head is disposed exterior to the component and positioned in a second orientation that is rotationally spaced about the fastener axis with respect to the first orientation.

In the fourth aspect, the driving unit may include a crank that rotates about the drive axis and supports the pin at a location radially spaced from the drive axis. A direction of translation of the fastener body along the fastener axis may be based on a rotational position of the crank about the drive axis. The driving unit may include a wheel configured to rotate about a wheel axis that is spaced from and extends parallel to the drive axis. The wheel may define a slot configured to guide motion of the pin. The wheel may rotate about the wheel axis when the pin engages an end of the slot and be stationary when the pin travels through the slot. The driving unit may include a link having a first end coupled to the wheel and a second end coupled to the proximal end of the fastener body. The wheel may define an opening through which the link is guided along a link axis that extends parallel to the drive axis. The proximal end of the fastener body may define an opening through which the link is guided along another link axis that extends parallel to the fastener axis. When the wheel rotates, the link may impart a torque to an interior portion of the fastener body that rotates the interior portion of the fastener body about the fastener axis, rotating the fastener head between the first and second orientations. Various features of the fourth aspect may be implemented alone in combination with other features of the fourth aspect.

A fifth aspect of the disclosure is a fastening system includes a fastener having a fastener body that defines a lock arm path along a fastener axis, a driving unit including a drive block that defines a drive block path and rotates about a drive axis that is perpendicular to the fastener axis, a slider having a first end that rotates with respect to the drive block and a second end that rotates with respect to the fastener body when the drive block rotates, a lock arm having a first end that traverses the drive block path and a second end that traverses the lock arm path when the drive block rotates, and a lock having a first end coupled to the second end of the lock arm and a second end coupled to the fastener body, the second end of the lock movable between a collapsed configuration and a locked configuration.

In the fifth aspect, the drive block may rotate about the drive axis, and the slider may impart a force against the fastener body to translate the fastener body along the fastener axis. A direction of translation of the fastener body along the fastener axis may be based on a rotational position of the drive block about the drive axis. The second end of the lock may include links that are coupled to and rotatable with respect to the fastener body. When the drive block rotates about the drive axis, the second end of the lock arm may impart a force against the first end of the lock to move the links between the collapsed configuration and the locked configuration in which the links extend perpendicular to the fastener axis. When the lock is in the collapsed configuration, a fastener head of the fastener may be inset within a first opening of a first component and the links may be positioned within an interior of the first component. When the lock is in the locked configuration, the fastener body may extend through the first opening in the first component and through a second opening in a second component and the links may be engaged with an inner surface of the second component. When the lock is in the locked configuration, the fastener body may extend through the first opening in the first component and the links may be engaged with an outer surface of the first component. The drive block path may have an arcuate shape and the lock arm path may have a straight shape. The drive unit may include a motor that rotates the drive block about the drive axis. Various features of the fifth aspect may be implemented alone in combination with other features of the fifth aspect.

### BRIEF DESCRIPTION OF THE DRAWINGS

FIGS. 1A to 1D are side sectional and front view illustrations of an embodiment of a concealed fastening system in first and second configurations.
FIGS. 2A to 2C are side sectional illustrations of another embodiment of a concealed fastening system in first, second, and third configurations.
FIGS. 3A and 3B are front view illustrations of another embodiment of a concealed fastening system in first and second configurations.
FIGS. 4A and 4B are side sectional illustrations of another embodiment of a concealed fastening system in first and second configurations.
FIGS. 5A and 5B are side sectional illustrations of another embodiment of a concealed fastening system in first and second configurations.
FIGS. 6A and 6B are side sectional illustrations of another embodiment of a concealed fastening system in first and second configurations.
FIGS. 7A and 7B are side sectional illustrations of another embodiment of a concealed fastening system in first and second configurations.
FIGS. 8A and 8B are side sectional illustrations of another embodiment of a concealed fastening system in first and second orientations.
FIGS. 9A and 9B are top sectional illustrations of another embodiment of a concealed fastening system in collapsed and locked configurations.
FIG. 10 is a method of fastening using one or more of the concealed fastening systems of FIGS. 1A to 9B.
FIG. 11 is an illustration of a fastening system.

### DETAILED DESCRIPTION

Concealed fastening systems include at least one fastener with a fastener head inset or otherwise aligned within a first opening in a surface of a first component. A body of the fastener can be driven to extend from the surface of the first component and to pass through a second opening in a second component. The fastener head can be rotated, increased in size, retracted, engaged with, or otherwise captured by a surface of the second component to couple the first and second components using the fastener. The concealed fastening system can include a motor that translates (e.g., extends or retracts) and optionally rotates a fastener and a guide that directs (e.g., aims) such motion of the fastener. Such motion can include translation, rotation, size change of the fastener, or combinations thereof.

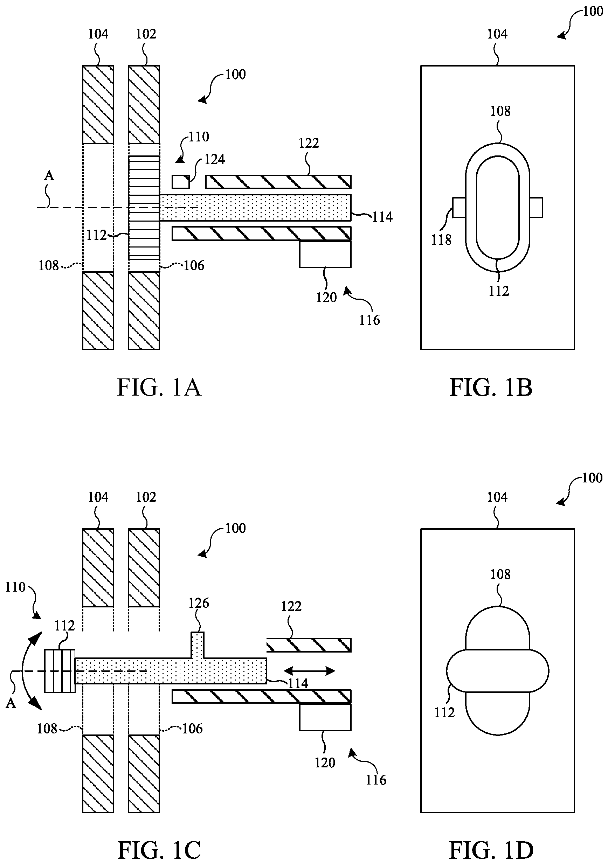

FIGS. 1A to 1D show side sectionals views (see FIGS. 1A and 1C) and front views (see FIGS. 1B and 1D) of an embodiment of a fastening system 100 in a first configuration in FIGS. 1A and 1B and a second configuration in FIGS. 1C and 1D. The fastening system 100 is configured to secure a first component 102 and a second component 104. The first component 102 may be a surface of a door opening, a bed opening, a hatch opening, or another component. The second component 104 may be a surface of door, a tailgate, a liftgate, or another component. The first component 102 includes a first opening 106, and the second component 104 includes a second opening 108. The fastening system 100 includes a fastener 110 having a fastener head 112 disposed at a distal end of a fastener body 114. The fastening system 100 is coupled to a driving unit 116 configured to cause the fastener to move from the first configuration of FIGS. 1A and 1B to the second configuration of FIGS. 1C and 1D. The driving unit 116 may be disposed within an interior of the first component 102. A seal 118 (see FIG. 1B) may be located adjacent to the second opening 108 on a surface of the second component 104.

The first opening 106, the second opening 108, and the fastener head 112 have corresponding elongated shapes as shown in FIG. 1B. Though the elongated shapes shown are generally rectangular with curved edges, ovular shapes, rectangles, parallelograms, or other elongated shapes are also possible. The shapes of the first opening 106, the second opening 108, and the fastener head 112 may also take the form of other polygons, such as squares, triangles, pentagons, etc. The fastener head 112 is sized and shaped to pass through the first opening 106 and the second opening 108. The relative size of the fastener head 112 with respect to the first opening 106 and the second opening 108 may be such that only a small gap is visible, thus concealing the fastener head 112 from a vantage point of a user viewing a surface of the first component 102 within which the fastener head 112 is inset. The fastener head 112 can pass through the first opening 106 and the second opening 108 in an unobstructed manner when such components are generally aligned with respect to an axis A. Aligning the first opening 106 and the second opening 108 supports using the fastening system 100 to couple the first component 102 and the second component 104. In other words, the axis A extends through central portions of the first opening 106 and the second opening 108 when the first component 102 and the second component 104 are positioned in a manner intended for fastening with the fastening system 100, such as when a user closes or otherwise aligns a door with a door opening, a tailgate with a bed opening, or a liftgate with a hatch opening.

The axis A is shown as extending through a central portion of the fastener head 112 and the fastener body 114 in FIGS. 1A and 1C when the first component 102 and the second component 104 are positioned as shown. The axis A is indicated to serve only as a reference to describe movement of the fastener 110 between the configurations or positions shown in FIGS. 1A to 1D. For example, the fastener 110 has a first configuration shown in FIGS. 1A and 1B with the fastener head 112 inset within the first opening 106 of the first component 102. In the first configuration, an outer surface of the fastener head 112 is flush with an outer surface of the first component 102. The flush condition may include the outer surfaces of the fastener head 112 and the first component 102 extending along a common plane as shown or may include the outer surface of the fastener head 112 being slightly under-flush or slightly proud with respect to the outer surface of the first component 102. In the first configuration of FIGS. 1A and 1B, the fastener 110 does not protrude or extend from the first component 102, and with only a small gap between the fastener head 112 and the first component 102, the fastening system 100 may be described as achieving a hidden or concealed configuration. In the first configuration, the fastener head 112 is in a first orientation with respect to the axis A and the first opening 106 and the second opening 108. This first orientation may be described as inset or aligned as the elongated shape of the fastener head 112 is matched to the elongated shapes of the first opening 106 and the second opening 108.

The fastener 110 has a second configuration shown in FIGS. 1C and 1D. The fastener 110 has translated along the axis A such that the fastener body 114 extends through the first opening 106 in the first component 102 and through the second opening 108 in the second component 104. Such translation of the fastener 110 along the axis A is shown with a horizontal, left-right arrow in FIG. 1C. In the second configuration, an inner surface of the fastener head 112 engages with an inner surface of the second component 104 to secure the second component 104 to the first component 102. In other words, the fastener head 112 has moved to a second orientation as shown in FIGS. 1C and 1D with respect to the axis A, for example, has rotated approximately ninety degrees, that is, near or about ninety degrees such eighty degrees, eighty-five degrees, ninety-five degrees, or one-hundred degrees, about the axis A as compared to the first orientation shown in FIGS. 1A and 1B. Such rotation of the fastener head 112 about the axis A is indicated with a curved arrow extending around the axis A in FIG. 1C. In an example where the first opening 106, the second opening 108, and the fastener head 112 have corresponding polygonal shapes, such as triangular shapes, square shapes, or pentagonal shapes, the fastener head 112 may be rotated a predetermined amount, such as fifteen degrees, thirty degrees, forty-five degrees, etc. in the second orientation.

In the second orientation of the fastener head 112 shown in FIG. 1D, the inner surface of the fastener head 112 may be in direct contact with the inner surface of the second component 104, or the seal 118 (see FIG. 1B) may be compressed between the inner surface of the fastener head 112 and the inner surface of the second component 104. The second component 104 can be secured to or otherwise held against the first component 102 given placement or position of the various components within the fastening system 100. That is, the driving unit 116 is internal to the first component 102, the fastener body 114 extends through the first opening 106 and the second opening 108, and an overlap condition is established between the inner surfaces of the fastener head 112 and the second component 104 when the fastener head 112 is in the second, rotated orientation shown in FIG. 1D. Though the rotation of the fastener head 112 about the axis A is shown as approximately ninety degrees when comparing FIGS. 1B and 1D, coupling may also be established by other amounts of rotation, such as by 30 degrees, 60 degrees, or 120 degrees of rotation.

To move the fastener 110 between the first configuration shown in FIGS. 1A and 1B and the second configuration shown in FIGS. 1C and 1D, the driving unit 116 can cause the fastener head 112 to first extend or translate in a first direction (e.g., left) along the axis A that extends through the fastener body 114, then rotate about the axis A (e.g., right or left approximately ninety degrees), then retract or translate in a second direction opposite the first direction (e.g., right) along the axis A. In this manner, the fastener head 112 may be turned or rotated when the fastener head 112 is positioned within an interior of the second component 104 before being retracted by the driving unit 116 to engage the inner surface of the fastener head 112 with the inner surface of the second component 104 to securely couple the first component 102 and the second component 104. This sequence of extension (translation left), rotation, and retraction (translation right) reduces or avoids rotational friction between the fastener head 112 and the second component 104 during coupling of the first component 102 and the second component 104.

The driving unit 116 in the example of FIGS. 1A and 1C includes a motor 120 and a guide 122. The motor 120 may be part of a motor assembly. The motor 120 is configured to translate (e.g., extend or retract) and rotate the fastener 110 between the first and second configurations while the guide 122 directs (e.g., aims) such translation and rotation. The motor 120 may include any type of device configured to cause motion of the fastener 110, such as a solenoid, a linear actuator, or a rotary motor. The motor 120 can cause motion based on signals provided from a controller based on an electrical connection to the controller. The controller may be a motor controller associated with the motor 120, a controller associated with a computing device external to the motor 120, a controller associated with a computing device for a transportation device that includes the fastening system 100, etc. The motor 120 may be a single motor configured to drive extension, rotation, and retraction of the fastener 110 or dual motors, one for extension and one for retraction or one for translation and one for rotation. In the example of FIGS. 1A to 1D, the driving unit 116 may include gears to convert rotational motion of the motor 120 to linear and rotational motion of the fastener 110. For example, the motor may rotate in a single direction to move the fastener 110 between the first and second configurations.

The guide 122 may also include a guide path 124 (e.g., a track or a slot, only a portion of which is shown in the sectional views of FIGS. 1A and 1C) that directs travel of a pin 126 (e.g., a cam follower) extending from the fastener body 114, such as in a concentric cam and cam follower design. Motion of the pin 126 through the guide path 124 may include translation along the axis A, rotation about the axis A, or both as shown by the arrows in FIG. 1C. The guide 122 directs or aims by enforcing a predetermined sequence of translation and rotation, for example, a pattern, through which the pin 126 will travel through the guide path 124.

The fastening system 100 of FIGS. 1A to 1D is beneficial to avoid having protruding parts present at an interface between the first and second components 102, 104. Various portions of the fastening system 100 can also be protected from environmental factors that may be present external to the first and second components 102, 104 given the hidden or concealed nature of the fastening system 100.

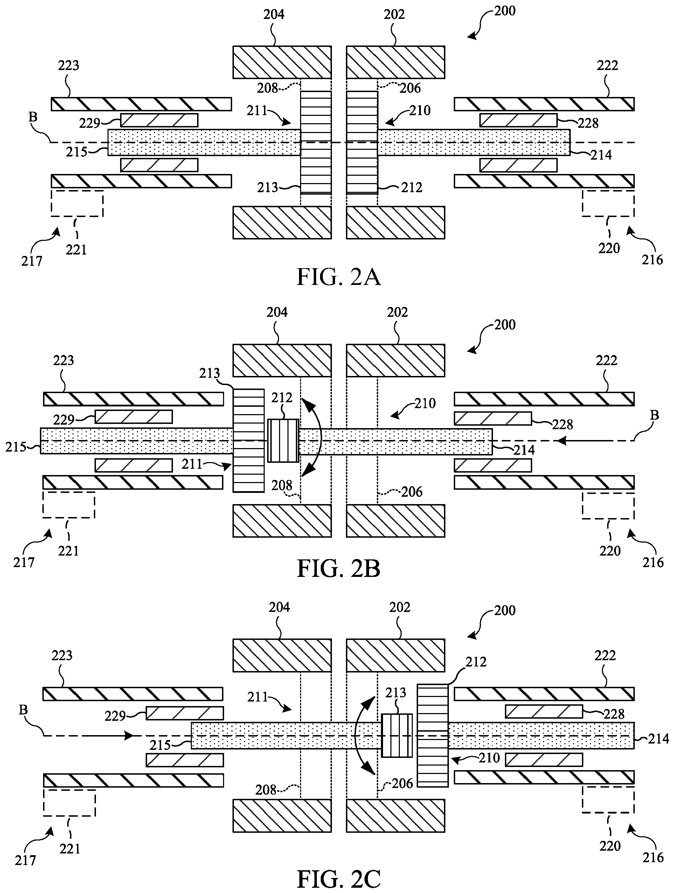

FIGS. 2A to 2C show side sectional views of another embodiment of a fastening system 200. The fastening system 200 is similar to the fastening system 100 of FIGS. 1A to 1D. The fastening system 200 is configured to secure a first component 202 and a second component 204. The first component 202 includes a first opening 206, and the second component 204 includes a second opening 208. The fastening system 200 includes first and second fasteners 210, 211 with respective first and second fastener heads 212, 213 disposed at distal ends of respective first and second fastener bodies 214, 215. The fastening system 200 includes first and second driving units 216, 217 configured to cause the first and second fasteners 210, 211 to move from respective first configurations (see FIG. 2A) to respective second configurations (see FIGS. 2B), and optionally, to respective third configurations (see FIG. 2C). The first and second driving units 216, 217 include components shown in dotted line to indicate an optional nature. The first driving unit 216 may be disposed within an interior of the first component 202, and the second driving unit 217 may be disposed within an interior of the second component 204.

As shown in FIG. 2A, the first and second fasteners 210, 211 have first configurations where the first and second fastener heads 212, 213 are inset within the respective first and second openings 206, 208 in the first and second components 202, 204. Respective outer surfaces of the first and second fastener heads 212, 213 are flush with respective outer surfaces of the first and second components 202, 204 in the first configurations such that the visual and physical interruption of the first and second components 202, 204 by the inset first and second fastener heads 212, 213 is reduced or mitigated. The size and shape of the first and second fastener heads 212, 213 are similar, and the first and second fastener heads 212, 213 can pass through the first and second openings 206, 208 in an unobstructed manner when such components are generally aligned with respect to an axis B as is described with respect to the second and third configurations of the first and second fastener 210, 211.

As shown in FIG. 2B, the first fastener 210 has a second configuration where the first fastener body 214 extends through the first and second openings 206, 208 and an inner surface of the first fastener head 212 engages with an inner surface of the second component 204 (shown in dashed line) to secure the first and second components 202, 204. This engagement can occur in a manner similar to that described with respect to FIGS. 1C and 1D, such as by the first driving unit 216 causing the first fastener 210 to extend (i.e., translate left along the axis B), rotate about the axis B, then retract (i.e., translate right along the axis B). The second fastener 211 also has a second configuration shown in FIG. 2B where an outer surface of the second fastener head 213 is engaged by an outer surface of the first fastener head 212 within an interior of the second component 204. In this example, the second driving unit 217 may not be present, for example, if the second fastener 211 is caused to passively retract in a left direction along the axis B based on contact force and motion of the first fastener 210 extending in the left direction along the axis B under operation of the first driving unit 216. In another example, the second driving unit 217 may be configured to actively retract or cause translation of the second fastener 211 in a left direction along the axis B while the first driving unit 216 causes the first fastener 210 to extend or translate in a left direction along the axis B.

As shown in FIG. 2C, the second fastener 211 has a third configuration where the second fastener body 215 extends through the first and second openings 206, 208 and an inner surface of the second fastener head 213 engages with an inner surface of the first component 202 (shown in dashed line) to secure the first and second components 202, 204. The first fastener 210 also has a third configuration shown in FIG. 2C where an outer surface of the first fastener head 212 is engaged by an outer surface of the second fastener head 213 within an interior of the first component 202. In this example, the first driving unit 216 may have optional components, for example, if the first fastener 210 is caused to passively retract in a right direction along the axis B based on contact force and motion of the second fastener 211 extending in the right direction along the axis B under operation of the second driving unit 217. In another example, the first driving unit 216 may be configured to actively retract or cause translation of the first fastener 210 in a right direction along the axis B while the second driving unit 217 causes the second fastener 211 to extend or translate in a right direction along the axis B.

To effect extension, retraction, and rotation, the first and second driving units 216, 217 can include (optional) first and second motors 220, 221 and first and second guides 222, 223. The first and second motors 220, 221 may be part of a motor assembly. The first and second motors 220, 221 are configured to translate (e.g., extend or retract) and rotate the first and second fasteners 210, 211 while the first and second guides 222, 223 direct (e.g., aim) such translation and rotation between the first, second, and third configurations shown in FIGS. 2A to 2C. The first and second motors 220, 221 may include any type of device configured to cause motion of the first and second fasteners 210, 211, such as solenoids, linear actuators, or rotary motors. In the example of FIGS. 2A to 2C, the first and second driving units 216, 217 may include gears to convert rotational motion of the first and second motors 220, 221 to linear and rotational motion of the first and second fasteners 210, 211. For example, the first and second motors 220, 221 may each rotate in a single direction to move the first and second fasteners 210, 211 between the first, second, and third configurations.

The first and second guides 222, 223 may include first and second threaded mechanisms 228, 229, such as ball screw mechanisms, lead screw mechanisms, reverse-threaded nuts, etc., that can be used to control positions of the first and second fasteners 210, 211 along and about the axis B, with respect to the first and second guides 222, 223, and in cooperation with the first and second motors 220, 221. That is, the first and second guides 222, 223 direct or aim by enforcing a predetermined sequence of translation and rotation, for example, a pattern and a speed, through which and at which the first and second fasteners 210, 211 will translate and rotate.

Though the first and second fasteners 210, 211 of FIGS. 2A to 2C are described as having first, second, and third configurations, the fastening system 200 may also be described in terms of positions of the first and second fastener heads 212, 213. For example, in FIG. 2A, the first fastener head 212 has a first position flush and inset within the first opening 206. In FIG. 2B, the first fastener head 212 has a second position extended (left) and rotated about the axis B that couples the first and second components 202, 204. In FIG. 2C, the first fastener head 212 has a third position retracted (right) along the axis B and within an interior of the first component 202. The same configurations can be described with respect to the second fastener head 213. For example, in FIG. 2A, the second fastener head 213 has a first position flush and inset within the second opening 208. In FIG. 2B, the second fastener head 213 has a second position retracted (left) along the axis B and within an interior of the second component 204. In FIG. 2C, the second fastener head 213 has a third position extended (right) and rotated about the axis B that couples the first and second components 202, 204.

The fastening system 200 of FIGS. 2A to 2C thus allows for coupling of the first and second components 202, 204 from two separate sides of the interface between the first and second components 202, 204. The fastening system 200 also allows for one of the first and second driving units 216, 217 to be optionally passive. For example, if the first driving unit 216 includes motor 220 that is used to cause motion of the first fastener 210, and the first fastener 210 in turn abuts against and causes motion of the second fastener 211 while the first fastener 210 translates and rotates, the second driving unit 217 need not include the second motor 221, Instead, the second driving unit 217 may include only the guide 223 to direct (e.g. aim) motion of the second fastener 211. In such an example, the second threaded mechanism 229 may also be absent.

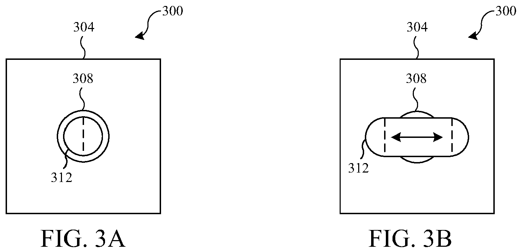

FIGS. 3A and 3B are front view illustrations of another embodiment of a fastening system 300 in first and second configurations. The fastening system 300 is similar to the fastening systems 100, 200 of FIGS. 1A to 2C. For example, the fastening system 300 may be used to couple the first and second components 102, 104 of FIGS. 1A to 1D or the first and second components 202, 204 of FIGS. 2A to 2C.

FIG. 3A shows a first configuration for the fastening system 300. In the front view illustration of the first configuration, a second component 304, a second opening 308 disposed in the second component 304, and a fastener head 312 are visible. The fastener head 312 has a round shape. The fastener head 312 may be inset within a first opening of a first component in a first position, that is, an outer surface of the fastener head 312 may be flush with an outer surface of the first component in the first position of FIG. 3A such that the fastener head 312 is visible through the second opening 308 in the second component 304 when the second component 304 is aligned for coupling or connection with the first component as in the front view of FIG. 3A. The fastening system 300 is shown with a vertical dashed line extending across the fastener head 312 to indicate that the fastener head 312 has one or more changeable features.

FIG. 3B shows a second configuration for the fastening system 300. In the front view illustration of the second configuration, the fastener head 312 has been moved to a second position (in a direction out of the page and toward the viewer) in a manner such that the fastener head 312 passes through the second opening 308 and is proud of the surface of the second component 304. In this second configuration, a size and a shape of the fastener head 312 has been changed such that the fastener head 312 has an elongated shape in FIG. 3B as compared to the round shape in FIG. 3A. The change in the shape and the size of the fastener head 312 is indicated using a horizontal or left-right arrow and vertical dashed lines in FIG. 3B. Though round (FIG. 3A) and elongated (FIG. 3B) examples are shown for the fastener head 312, other shapes are also possible, such as square and rectangular.

The change in size and shape of the fastener head 312 may be implemented using, for example, a telescoping mechanism, a pneumatic mechanism, a hydraulic mechanism, a shape-memory mechanism, or another shape-changing mechanism. For example, a driving unit similar to the driving units 116, 216, 217 of FIGS. 1A to 2C may include or be coupled to such a shape-changing mechanism to implement the size and shape change in the fastening system 300 of FIGS. 3A and 3B. For example, a driving unit can cause the fastener head 312 to translate through the first opening and the second opening 308, then cause the shape-changing mechanism to cause the fastener head 312 to expand in size to move the fastening system 300 from the first configuration of FIG. 3A to the second configuration of FIG. 3B.

The fastener head 312 in the fastening system 300 of FIGS. 3A to 3B may be smaller in size in the first configuration of FIG. 3A and thus even less obtrusive than the fastener heads 112, 212, 213 described with respect to the fastening systems 100, 200. The smaller the fastener head 312, the lower the visual and physical interruption to the surface of the first component.

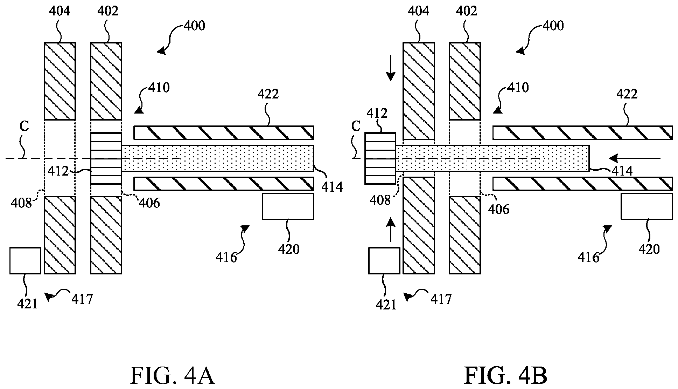

FIGS. 4A and 4B are side sectional illustrations of another embodiment of a fastening system 400 in first and second configurations. The fastening system 400 is similar to the fastening systems 100, 200, 300 of FIGS. 1A to 3B. The fastening system 400 is configured to secure a first component 402 and a second component 404. The first component 402 includes a first opening 406, and the second component 404 includes a second opening 408. The fastening system 400 includes a fastener 410 with a fastener head 412 disposed at a distal end of a fastener body 414. The fastening system 400 includes first and second driving units 416, 417 configured to cause the fastening system 400 to move from the first configuration of FIG. 4A to the second configuration of FIG. 4B. The first driving unit 416 may be disposed within an interior of the first component 402, and the second driving unit 417 may be disposed within an interior of the second component 404.

As shown in FIG. 4A, the fastening system 400 has a first configuration with the fastener head 412 inset or otherwise aligned within the first opening 406 of the first component 402. An outer surface of the fastener head 412 is flush with an outer surface of the first component 402 such that the visual and physical interruption of the first component 402 by the fastener head 412 is reduced or mitigated. The fastener head 412 is sized and shaped to be able to pass through the first and second openings 406, 408 in an unobstructed manner when such components are generally aligned with respect to an axis C. The fastener head 412 is also sized and shaped such that a step or offset exists between the fastener head 412 and the fastener body 414. This step or offset may create a right angle as shown, may be ramped, or may include a more gradual transition. The shape of the fastener head 412 may be round, square, diamond, ovular, etc.

As shown in FIG. 4B, the fastening system 400 has a second configuration where the fastener body 414 extends through the first and second openings 406, 408. Movement of the fastener 410 between the first configuration of FIG. 4A and the second configuration of FIG. 4B is shown by the left-facing, horizontal arrow. A size of the second opening 408 is also reduced in the second configuration, that is, the second opening 408 reduces in size as shown by the vertical arrows along the inner surface of the second component 404 in FIG. 4B. This extension of the fastener 410 and closure or reduction in size of the second opening 408 results in an inner surface of the fastener head 412 engaging with an inner surface of the second component 404 to secure the first and second components 402, 404. This engagement can occur after the first driving unit 416 causes the fastener 410 to extend to the position shown in FIG. 4B and the second driving unit 417 causes a portion (e.g., a shutter, a cover, etc.) of the second component 404 to extend to the position shown in FIG. 4B. The interior of the second component 404 can thus capture a ledge or lip at the step or offset between the fastener head 412 and the fastener body 414 to couple the second component 404 to the first component 402.

To effect extension, the first and second driving units 416, 417 can include first and second motors 420, 421. The first and second motors 420, 421 may be part of a motor assembly. The first driving unit 416 can also include a guide 422 configured to direct (e.g., aim) translation of the fastener 410 between the first and second configurations of the fastening system 400. The first and second motors 420, 421 may include devices configured to cause motion of the fastener 410 (e.g., extend, retract, or rotate) and the portion (e.g., a shutter, a cover, etc.) of the second component 404, such as solenoids, linear actuators, rotary motors, telescoping mechanisms, etc. For example, the first motor 420 may rotate in a single direction to move the fastener 410 between the first and second configurations.

In the example of FIGS. 4A and 4B, the guide 422 may include a guide path for travel of a pin or a cam follower extending from the fastener body 414, a ball screw mechanism, a lead screw mechanism, reverse-threaded nuts, or any other mechanism that can be used to control a position of the fastener 410 along and about the axis C and with respect to the guide 422 in cooperation with translation effected by the motor 420. That is, the guide 422 can be configured direct or aim the fastener body 414 by enforcing a predetermined sequence of translation and rotation, for example, a pattern and a speed, through which and at which the fastener 410 will translate and rotate.

The fastener head 412 in the fastening system 400 of FIGS. 4A to 4B may be smaller in size in both the first and second configurations than the fastener heads 112, 212, 213, 312 described with respect to the fastening systems 100, 200, 300. Changing (e.g., reducing) the second opening 408 in size to effect coupling also allows for at least some misalignment of the first and second openings 406, 408 prior to coupling. That is, the first and second openings 406, 408 need not be centered on the axis C as shown before coupling using the fastener 410 since force exerted by the second component 404 against the fastener body 414 may cause a desired alignment between the first and second components 402, 404 during execution of the coupling.

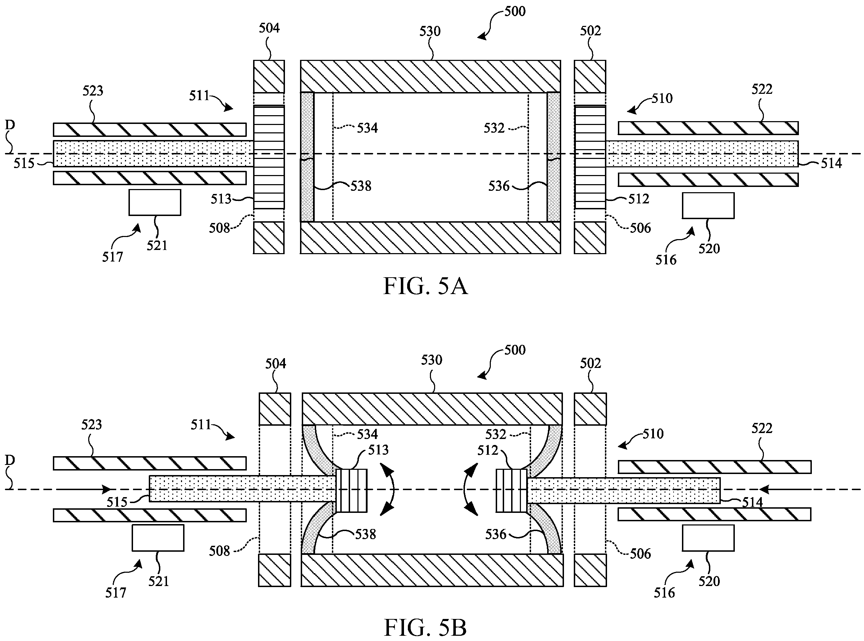

FIGS. 5A and 5B show side sectional views of another embodiment of a fastening system 500. The fastening system 500 is similar to the fastening systems 100, 200, 300, 400 of FIGS. 1A to 4B. The fastening system 500 is configured to secure a first component 502 and a second component 504 to an intermediate component 530. The first component 502 includes a first opening 506, the second component 504 includes a second opening 508, and the intermediate component 530 includes a third opening 532 and a fourth opening 534. To support coupling the intermediate component 530 between the first and second components 502, 504, the first opening 506 is aligned with the third opening 532 and the second opening 508 is aligned with the fourth opening 534.

The fastening system 500 includes first and second fasteners 510, 511 with respective first and second fastener heads 512, 513 disposed at distal ends of respective first and second fastener bodies 514, 515. The fastening system 500 also includes first and second driving units 516, 517 configured to cause the first and second fasteners 510, 511 to move from respective first configurations (see FIG. 5A) to respective second configurations (see FIGS. 5B). The first driving unit 516 may be disposed within an interior of the first component 502, and the second driving unit 517 may be disposed within an interior of the second component 504. In this manner, the intermediate component 530 may be passive, that is, the intermediate component 530 is configured to receive the first and second fasteners 510, 511 to effect coupling. The intermediate component 530 may be, for example, a bicycle rack, a ski rack, a cooler, a storage container, or another device suitable for use with a transportation device that includes the fastening system 500.

The intermediate component 530 may include first and second covers 536, 538 extending across the third and fourth openings 532, 534. The first and second covers 536, 538 are configured to obscure the third and fourth openings 532, 534 from view at a vantage point external to the intermediate component 530 as shown in FIG. 5A. The first and second covers 536, 538 are also configured to allow the first and second fasteners 510, 511 to pass through the third and fourth openings 532, 534 when the first and second fasteners are in the second configuration of FIG. 5B. The first and second covers 536, 538 may be made of a flexible material, a pierceable material, a deformable material, a stretchable material, a foldable material, or any other material sufficient to move or deform such that the first and second fasteners 510, 511 may pass through the third and fourth openings 532, 534 to effect coupling of the first and second components 502, 504 to the intermediate component 530.

As shown in FIG. 5A, the first and second fasteners 510, 511 have first configurations where the first and second fastener heads 512, 513 are inset within the respective first and second openings 506, 508 in the first and second components 502, 504. Respective outer surfaces of the first and second fastener heads 512, 513 are flush with respective outer surfaces of the first and second components 502, 504 in the first configurations such that the visual and physical interruption of the first and second components 502, 504 by the inset or aligned first and second fastener heads 512, 513 is reduced or mitigated. The size and shape of the first and second fastener heads 512, 513 may be elongated and similar. The first fastener head 512 can pass through the first and third openings 506, 532 and the second fastener head 513 can pass through the second and fourth openings 508, 534 in an unobstructed manner when the first, second, and intermediate components 502, 504, 530 are generally aligned with respect to an axis D as is described with respect to the second configuration of the first and second fasteners 510, 511 shown in FIG. 5B.

FIG. 5B shows that the first fastener 510 has a second configuration where the first fastener body 514 extends through the first and third openings 506, 532 and an inner surface of the first fastener head 512 engages with an inner surface of the intermediate component 530 (shown in dashed line) to secure the first and intermediate components 502, 530. The second fastener 511 has a second configuration where the second fastener body 515 extends through the second and fourth openings 508, 534 and an inner surface of the second fastener head 513 engages with another, separate inner surface of the intermediate component 530 (shown in dashed line) to secure the second and intermediate components 504, 530.

To couple the first, second, and intermediate components 502, 504, 530, the first and second driving units 516, 517 can cause the first and second fasteners 510, 511 to extend by translating toward the intermediate component 530 along the axis D as shown by the horizontal arrows in FIG. 5B. The first and second driving units 516, 517 can then cause the first and second fasteners 510, 511 to rotate about the axis D to move the first and second fastener heads 512, 513 from the first positions shown in FIG. 5A to the second positions shown in FIG. 5B as indicated by the curved arrows in FIG. 5B. Such rotation about the axis D can be approximately eighty degrees, ninety degrees, one-hundred degrees, etc. The first and second driving units 516, 517 can then optionally retract the first and second fasteners 510, 511 by pulling or otherwise translating the first and second fasteners 510, 511 away from the intermediate component 530 in opposite directions along the axis D to achieve a secure, tightly sealed coupling of the first, second, and intermediate components 502, 504, 530 as shown in FIG. 5B.

To effect extension, rotation, and optional retraction, the first and second driving units 516, 517 can include first and second motors 520, 521 and first and second guides 522, 523 that direct (e.g.) aim extension, rotation, and optional retraction. The first and second motors 520, 521 may be part of a motor assembly. The first and second motors 520, 521 can translate (e.g., extend or retract) and rotate the first and second fasteners 510, 511 between the first and second configurations shown respectively in FIGS. 5A and 5B. The first and second motors 520, 521 may include devices configured to cause motion of the first and second fasteners 510, 511, such as solenoids, linear actuators, telescoping mechanisms, rotary motors, etc. The first and second motors 520, 521 may be individual motors configured to drive extension, rotation, and retraction of the fasteners 510, 511 or dual motors, with separate functions for translation and rotation. The first and second driving units 516, 517 may include gears to convert rotational motion of the first and second motors 520, 521 to linear and rotational motion of the first and second fasteners 510, 511. For example, the first and second motors 520, 521 may each rotate in a single direction to move the first and second fasteners 510, 511 between the first and second configurations.

The first and second guides 522, 523 may include guide paths for travel of pins or cam followers extending from the first and second fastener bodies 514, 515, ball screw mechanisms, lead screw mechanisms, reverse-threaded nuts, or any other mechanisms that can be used to control positions of the first and second fasteners 510, 511 along and about the axis D and with respect to the first and second guides 522, 523 in cooperation with the first and second motors 520, 521. That is, the first and second guides 522, 523 can be configured to direct or aim the first and second fastener bodies 514, 515 by enforcing predetermined sequences of translation and rotation, for example, patterns and speeds, through which and at which the fasteners 510, 511 will translate and rotate.

Though the first and second fasteners 510, 511 of FIGS. 5A and 5B are described as having first and second configurations, the fastening system 500 may also be described in terms of positions of the first and second fastener heads 512, 513. For example, in FIG. 5A, the first fastener head 512 has a first position flush and inset within the first opening 506 and the second fastener head 513 has a first position flush and inset within the second opening 508. In FIG. 5B, the first fastener head 512 has a second position extended along (left) and rotated about the axis D that couples the first and intermediate components 502, 530. The second fastener head 513 has a second position extended along (right) and rotated about the axis D that couples the second and intermediate components 504, 530. The fastening system 500 of FIGS. 5A and 5B thus allows for coupling of the first and second components 502, 504 using the intermediate component 530.

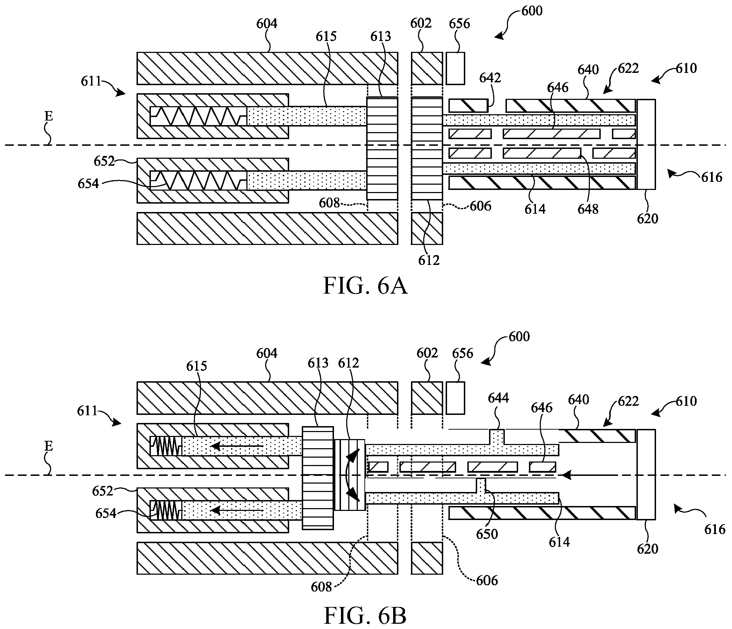

FIGS. 6A and 6B show side sectionals views of an embodiment of a fastening system 600 in a first configuration in FIG. 6A and in a second configuration in FIG. 6B. The fastening system 600 is similar to the fastening systems 100, 200, 300, 400, 500 of FIGS. 1A to 5B. The fastening system 600 is configured to secure a first component 602 and a second component 604. The first component 602 may include a surface of a door or door opening, a bed or bed opening, a hatch or hatch opening, a storage container or storage container opening, a trailer or trailer opening, or another component or another component opening. The second component 604 may include a surface of a door or door opening, a bed or bed opening, a hatch or hatch opening, a storage container or storage container opening, a trailer or trailer opening, or another component or another component opening. The first component 602 includes a first opening 606 in the relevant surface, and the second component 604 includes a second opening 608 in the relevant surface.

The fastening system 600 includes a first fastener 610 having a first fastener head 612 disposed at a distal end of a first fastener body 614. The fastening system 600 includes a second fastener 611 having a second fastener head 613 disposed at a distal end of a second fastener body 615. The first opening 606, the second opening 608, the first fastener head 612, and the second fastener head 613 may have corresponding elongated shapes. For example, in the position or configuration shown in FIG. 6A, the first fastener head 612 is sized and shaped to pass through the first opening 606, pass through the second opening 608, and abut the second fastener head 613. Though shown with elongated shapes, the first fastener head 612 and the second fastener head 613 may include corresponding oblong, square, triangular, trapezoidal, or other shapes.

The first fastener head 612 is sized and shaped to pass through the first opening 606 and the second opening 608 in an unobstructed manner when the first and second openings 606, 608 are generally aligned with respect to an axis E that extends horizontally through a central portion of the first fastener body 614 and horizontally through a central portion of the second fastener body 615. In other words, the axis E will also extend through central portions of the first opening 606 and the second opening 608 when the first component 602 and the second component 604 are positioned in a manner conducive for fastening with the fastening system 600, such as when a user closes or otherwise aligns a door with a door opening, a tailgate with a bed opening, a storage container with a storage container opening, a trailer with a trailer opening, or a liftgate with a hatch opening The axis E is indicated to serve as a reference to describe movement of the first fastener 610 and the second fastener 611 between the configurations or positions shown in FIGS. 6A and 6B.

In terms of operation of the fastening system 600, the first fastener 610 has a first configuration shown in FIG. 6A with the first fastener head 612 inset within the first opening 606 of the first component 602. In the first configuration of the first fastener 610, an outer surface of the first fastener head 612 is flush with an outer surface of the first component 602. The second fastener 611 also has a first configuration shown in FIG. 6A with the second fastener head 613 inset within the second opening 608 of the second component 604. In the first configuration of the second fastener 611, an outer surface of the second fastener head 613 is flush with an outer surface of the second component 604. The flush condition may include the outer surfaces of the first and second fastener heads 612, 613 and the first and second components 602, 604 extending along respective common planes as shown or may include the outer surfaces of the first and second fastener heads 612, 613 being slightly under-flush or slightly proud with respect to the outer surfaces of the first and second components 602, 604.

The first fastener 610 has a second configuration shown in FIG. 6B. With respect to the first configuration of the first fastener 610 shown in FIG. 6A, the first fastener 610 has translated along the axis E such that the first fastener body 614 extends through the first opening 606 in the first component 602 and through the second opening 608 in the second component 604. Such translation of the first fastener 610 along the axis E is shown with a horizontal, left-facing arrow on the axis E in FIG. 6B. In the second configuration of the first fastener 610, an inner surface of the first fastener head 612 engages with an inner surface of the second component 604 to secure the second component 604 to the first component 602. In other words, the first fastener head 612 has moved to a second orientation as shown in FIG. 6B with respect to the axis E. For example, the first fastener head 612 has rotated approximately ninety degrees, that is, near or about ninety degrees such eighty degrees, eighty-five degrees, ninety-five degrees, or one-hundred degrees, about the axis E as compared to the first orientation of the first fastener 610 shown in FIG. 6A. Such rotation of the first fastener head 612 about the axis E is indicated with a curved arrow extending around the axis E at a location of the first fastener head 612 in FIG. 6B. An inner surface of the first fastener head 612 may be in direct contact with an inner surface of the second component 604.

The second fastener 611 also has a second configuration shown in FIG. 6B. With respect to the first configuration of the second fastener 611 shown in FIG. 6A, the second fastener 611 has translated along the axis E such that the second fastener head 613 is disposed within an interior of the second component 604. An outer surface of the second fastener head 613 also abuts an outer surface of the first fastener head 612. Such translation of the second fastener 611 along the axis E is shown with a pair of horizontal, left-facing arrows at a location of the second fastener body 615 in FIG. 6B.

In the second configurations of the first fastener 610 and the second fastener 611, the second component 604 can be secured to or otherwise held against the first component 602 using the fastening system 600. To achieve this secured, locked, or engaged configuration of the first and second components 602, 604 shown in FIG. 6B, the fastening system 600 can include a driving unit 616. The driving unit 616 can include a motor assembly, for example, including a motor 620. The motor 620 is configured to translate and rotate the first fastener 610 in cooperation with a guide 622 that directs (e.g., aims) such motion. The motor 620 may include any type of device configured to cause motion of the first fastener 610, such as a solenoid, a linear actuator, or a rotary motor. The motor 620 can operate based on signals provided from a controller and an electrical connection to the controller. The motor 620 may be a single motor configured to drive translation (e.g., extension or retraction) and rotation of the first fastener 610 or dual motors, one for extension and one for retraction or one for translation and one for rotation. In the example of FIGS. 6A and 6B, the driving unit 616 may include gears to convert rotational motion of the motor 620 to linear and rotational motion of the first fastener 610. For example, the motor 620 may rotate in a single direction to move the first fastener 610 between the first and second configurations of the first fastener 610. In another example, the driving unit 616 can operate in a similar manner to the driving units 116, 216, 217, 416, 516, 517 described herein.

The guide 622 of FIGS. 6A and 6B can include a cam, e.g., a first cam 640, that defines a guide path, e.g., a first guide path 642. The first guide path 642 is radially spaced from the axis E that extends through the first fastener body 614. Only a portion of the first guide path 642 is shown based on the sectional nature of FIGS. 6A and 6B. The first fastener 610 can include a cam follower, e.g., a first cam follower 644. The first cam follower 644 extends from and is approximately perpendicular to the first fastener body 614, such as radially outward or away from the axis E. In the example of FIGS. 6A and 6B, the first cam follower 644 extends away from an exterior surface of the first fastener body 614. The first cam follower 644 is configured to travel the first guide path 642. The first guide path 642 may have straight portions, straight and arcuate portions, an angled shape, or another shape, such as an L-shape or a J-shape extending along and/or around a surface of the first cam 640 in order to direct both translation and rotation of the first fastener 610 using the first cam follower 644.

The guide 622 can include another cam, e.g., a second cam 646, that defines a guide path, e.g., a second guide path 648. The second guide path 648 is radially spaced from the first guide path 642. In this example, the second guide path 648 is located between the axis E that extends through the first fastener body 614 and the first guide path 642. Only a portion of the second guide path 648 is shown based on the sectional nature of the view. The first fastener 610 can include another cam follower, e.g., a second cam follower 650. The second cam follower 650 extends from and is approximately perpendicular to the first fastener body 614, such as radially inward or toward the axis E. In the example of FIGS. 6A and 6B, the second cam follower 650 extends away from an interior surface of the first fastener body 614, that is, the first fastener body 614 is hollow or cylindrical in nature such that the second cam 646 is positioned interior to, rotatable within, and translatable within the first fastener body 614. The second cam follower 650 is configured to travel the second guide path 648. The second guide path 648 may have a crisscross shape, straight and arcuate portions, an angled shape, or another shape, such as an L-shape or a J-shape extending along and/or around a surface of the second cam 658 to direct both translation and rotation of the first fastener 610 using the second cam follower 650.

The first guide path 642 defined in the first cam 640, the first fastener body 614, and the second guide path 648 defined in the second cam 646 are concentric with respect to the axis E extending through the first fastener body 614. This allows for both compact packaging space and precise control of motion (e.g., translation and rotation) of the first fastener 610 between the first and second configurations shown in FIGS. 6A and 6B. For example, to move the first fastener 610 between the first configuration shown in FIG. 6A and the second configuration shown in FIG. 6B, the driving unit 616 can cause the first fastener head 612 to first extend or translate in a first direction (e.g., left) along the axis E that extends through the fastener body 114. This first or initial translation may occur in response to rotation of the first fastener body 614 with respect to the first cam 640 and/or the second cam 646. That is, the first fastener body 614 can rotate with respect to one or both of the first and second cams 640, 646 based on motion of the first and second cam followers 644, 650 within the first and second guide paths 642, 648. In this way, the second cam 646 acts as a screw mechanism to translate the first fastener body 614.

The first and second cam followers 644, 650 may be subject to high frictional loads in operation of the fastening system 600. To reduce friction, the first and second cam followers 644, 650 may be designed to be movable with respect to the first fastener body 614, such as using springs at an interface between the first and second cam followers 644, 650 and the first fastener body 614. The first and second cam followers 644, 650 can be designed with rounded ends to reduce friction. Further, to avoid slip of the first or second cam followers 644, 650 with respect to the first or second cams 640, 646, a bearing and groove may be used to allow for smoother rotation and translation between components. The first or second guide paths 642, 648 may be designed to have softer or larger radius transitions instead of tighter radius turns or bends in order to further reduce friction during motion of the first and second cam followers 644, 650. The friction reduction features described in this paragraph can be used individually or together in the fastening system 600.

After the first fastener 610 translates through the first and second openings 606, 608, the first fastener head 612 can rotate about the axis E (e.g., right or left approximately ninety degrees) when positioned within the interior of the second component 604. In a next optional step, the motor 520 can retract the first fastener 610, e.g., translate the first fastener 610 in a second direction opposite the first direction (e.g., right) along the axis E. In this manner, the first fastener head 612 may be turned or rotated when the first fastener head 612 is positioned within an interior of the second component 604 before being retracted by the driving unit 616 to engage the inner surface of the first fastener head 612 with the inner surface of the second component 604 to securely couple the first component 602 and the second component 604.

Motion of the second fastener 611 in the example of FIGS. 6A and 6B can be directed using a guide 652 and a spring 654 configured to apply force to the second fastener body 615. The spring 654 can couple the second fastener body 615 to the guide 654 as shown or may act between such components without a direct coupling. The spring 654 can exert or apply force against the second fastener body 615 to position the second fastener head 613 within the second opening 608 in the first configuration of the second fastener 611 shown in FIG. 6A. The spring 654 may have a spring constant sufficient to maintain a position of the second fastener head 613 as inset within the second opening 608 under casual contact, for example, should a user attempt to press or push the second fastener head 613.

The spring 654 is configured to be compressed when the first fastener head 612 abuts the second fastener head 613 as shown in FIG. 6B. In other words, the spring 654 is configured to exert or apply force to the second fastener body 615 and to engage the second fastener head 613 against the first fastener head 612 in the second configuration of the second fastener 611 in response to the first fastener head 612 engaging, abutting, or otherwise pressing against the second fastener head 613 to compress the spring 654 in the second configuration of the first fastener 610. In some embodiments, use of the guide 652 and the spring 654 can replace the use of retraction of the first fastener 610 using the driving unit 616 to effect coupling of the first and second components 602, 604. The spring constant of the spring 654 may be such that only a predetermined force, the force exerted by the first fastener head 612 against the second fastener head 613, is sufficient to compress the spring 654 within the guide 652.

In some embodiments, the fastening system 600 can include a sensor 656, such as a Hall effect sensor, within or proximate to a surface of the first component 602 or otherwise nearby or adjacent to the first opening 606. The sensor 656 can identify interference of magnetic fields, for example, a magnetic field of the second fastener 611 or the second component 604 and a magnetic field of the first fastener 610 or the first component 602. When such magnetic fields or interference of magnetic fields is detected, indicating a sufficient proximity of the first and second components 602, 604, the fastening system 600 can be configured to automatically begin the latching or locking sequence. For example, if a user rotates or positions the second component 604 (e.g., a tailgate) for engagement with the first component 602 (e.g., a tailgate opening), the sensor 656 can detect proximity or interference of magnetic fields, and the sensor 656 can send signals to a controller to activate the fastening system 600.

With the first and second fastener heads 612, 613 inset within the first and second openings 606, 608, and the spring 654 and the motor 620 holding positions of the first and second fastener heads 612, 613 in the first configuration of FIG. 6A, a user of the fastening system 600 may not be able to determine which of the first and second components 602, 604 includes active components and which of the first and second components 602, 604 includes passive components. In other words, function of the fastening system 600 may be both automated and hidden. This hidden or concealed nature of the components of the fastening system 600 is desirable both for unobtrusive design and security.

The fastening system 600 may be able to control unlocking, unlatching, or releasing of the first fastener 610 from the second component 604 by reversing the process described. For example, the first fastener head 612 may be moved further into the interior of the second component 604 than is shown in FIG. 6B to avoid friction between the first fastener head 612 and an interior surface of the second component 604, then rotated around the axis E to align the elongated shape of the first fastener head 612 with the first and second openings 606, 608, then retracted, for example, using the driving unit 616, so that the first fastener head 612 travels through the second opening 608 and returns to a position inset within the first opening 606 as is shown in FIG. 6A. The fastening system 600 is thus both engaged and disengaged in a blind or concealed fashion.

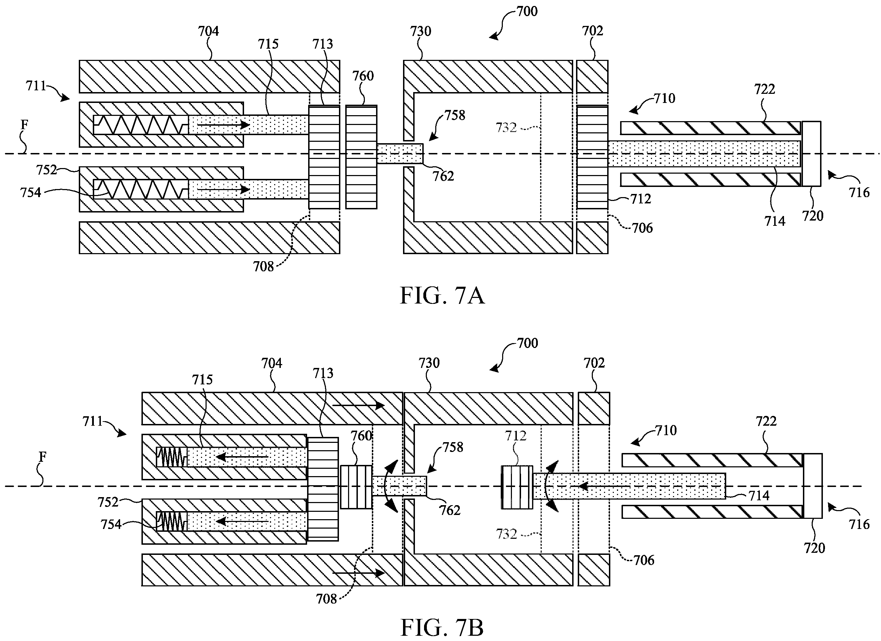

FIGS. 7A and 7B show side sectional views of an embodiment of a fastening system 700 in a first configuration in FIG. 7A and in a second configuration in FIG. 7B. The fastening system 700 is similar to the fastening systems 100, 200, 300, 400, 500, 600 of FIGS. 1A to 6B. The fastening system 700 is configured to secure a first component 702 and a second component 704 to an intermediate component 730. The first component 702 includes a first opening 706, the second component 704 includes a second opening 708, and the intermediate component 730 includes a third opening 732. The fastening system 700 includes a first fastener 710 having a first fastener head 712 disposed at a distal end of a first fastener body 714. The fastening system 700 includes a second fastener 711 having a second fastener head 713 disposed at a distal end of a second fastener body 715. The fastening system 700 includes an intermediate fastener 758 have an intermediate fastener head 760 disposed at a distal end of an intermediate fastener body 762. To support coupling the intermediate component 730 between the first and second components 702, 704 using the fastening system 700, the first opening 706 is aligned with the third opening 732 and the intermediate fastener head 760 is aligned with the second opening 708.

The first opening 706, the second opening 708, the third opening 732, the first fastener head 712, the second fastener head 713, and the intermediate fastener head 760 may have corresponding elongated shapes. For example, in the position or configuration shown in FIG. 7A, the first fastener head 712 is sized and shaped to pass through the first opening 706 and the third opening 732. The intermediate fastener head 760 is sized and shaped to pass through the second opening 708 and abut the second fastener head 713. Though shown with elongated shapes, the first fastener head 712, the second fastener head 713, and the intermediate fastener head 760 may include oblong, square, triangular, trapezoidal, or other shapes.

The first fastener head 712 is sized and shaped to pass through the first opening 706 and the third opening 732 in an unobstructed manner when the first and third openings 706, 732 are generally aligned with respect to an axis F that extends horizontally through a central portion of the first fastener body 714, the second fastener body 715, and the intermediate fastener body 762. The intermediate fastener head 760 is sized and shaped to pass through the second opening 708 when the intermediate fastener head 760 is aligned with the second fastener head 713.

The axis F is indicated to serve as a reference to describe movement of the first fastener 710, the second fastener 711, and the intermediate fastener 758 between the configurations or positions shown in FIGS. 7A and 7B. The axis F will extend through central portions of the first opening 706, the second opening 708, and the third opening 732 when the first component 702, the second component 704, and the intermediate component 730 are positioned in a manner conducive for fastening with the fastening system 700, such as when a user aligns the intermediate component 730 between the first component 702 and the second component 704. In some examples, such as examples where the intermediate component 730 is an object such as a cooler, a storage container, etc., rails or other alignment means may be present between the first and second components 702, 704 to engage with and support the intermediate component 730 during the fastening process using the fastening system 700.

In the first configuration of the fastening system 700 in FIG. 7A, the first fastener 710 has a first configuration with the first fastener head 712 inset within the first opening 706 of the first component 702. In the first configuration of the first fastener 710, an outer surface of the first fastener head 712 is flush with an outer surface of the first component 702. The second fastener 711 also has a first configuration shown in FIG. 7A with the second fastener head 713 inset within the second opening 708 of the second component 704. In the first configuration of the second fastener 711, an outer surface of the second fastener head 713 is flush with an outer surface of the second component 704. The intermediate fastener 758 has a first configuration shown in FIG. 7A with the intermediate fastener head 760 protruding from the intermediate component 730 such that a portion of the intermediate fastener body 762 is visible from a position outside of the intermediate component 730.

The flush condition may include the outer surfaces of the first and second fastener heads 712, 713 and the first and second components 702, 704 extending along respective common planes as shown or may include the outer surfaces of the first and second fastener heads 712, 713 being slightly under-flush or slightly proud with respect to the outer surfaces of the first and second components 702, 704. The protruding condition of the intermediate fastener 758 may include an outer surface of the intermediate fastener head 760 being spaced a predetermined distance from the outer surface of the intermediate component 730. The intermediate fastener head 760 may be sufficiently spaced from the outer surface of the intermediate component 730 to allow the intermediate fastener head 760 to pass through the second opening 708 and reach a position within an interior of the second component 704 to support coupling or securing the intermediate component 730 and the second component 704.

The first fastener 710 has a second configuration shown in FIG. 7B. With respect to the first configuration of the first fastener 710 shown in FIG. 7A, the first fastener 710 has translated along the axis F such that the first fastener body 714 extends through the first opening 706 in the first component 702 and through the third opening 732 in the intermediate component 730. Such translation of the first fastener 710 along the axis F is shown with a horizontal, left-facing arrow on the first fastener body 714 in FIG. 7B. In the second configuration of the first fastener 710, an inner surface of the first fastener head 712 engages with an inner surface of the intermediate component 730 to secure the intermediate component 730 to the first component 702. In other words, the first fastener head 712 has moved to a second orientation as shown in FIG. 7B with respect to the axis F. For example, the first fastener head 712 has rotated approximately ninety degrees, that is, near or about ninety degrees such eighty degrees, eighty-five degrees, ninety-five degrees, or one-hundred degrees, about the axis F as compared to the first orientation of the first fastener 710 shown in FIG. 7A. Such rotation of the first fastener head 712 about the axis F is indicated with a curved arrow extending around the axis F at a location near the first fastener head 712 in FIG. 7B.

The intermediate fastener 758 has a second configuration shown in FIG. 7B. In the second configuration of the intermediate fastener 758, an inner surface of the intermediate fastener head 760 engages with an inner surface of the second component 704 to secure the intermediate component 730 to the second component 704. With respect to the first configuration of the intermediate fastener 758 shown in FIG. 7A, the intermediate fastener 758 has rotated approximately ninety degrees, that is, near or about ninety degrees such eighty degrees, eighty-five degrees, ninety-five degrees, or one-hundred degrees, about the axis F as compared to the first orientation of the intermediate fastener 758 shown in FIG. 7A. Such rotation of the intermediate fastener head 760 about the axis F is indicated with a curved arrow extending around the axis F at a location near the intermediate fastener head 760 in FIG. 7B.

The second fastener 711 has a second configuration shown in FIG. 7B. With respect to the first configuration of the second fastener 711 shown in FIG. 7A, the second fastener 711 has translated along the axis F such that the second fastener head 713 is disposed within an interior of the second component 704. An outer surface of the second fastener head 713 also abuts an outer surface of the intermediate fastener head 760. Such translation of the second fastener 711 along the axis F is shown with a pair of horizontal, left-facing arrows at a location of the second fastener body 715 in FIG. 7B.

In the second configurations of the first fastener 710, the second fastener 711, and the intermediate fastener 758, the intermediate component 730 can be secured to or otherwise held between the first component 702 and the second component 704 using the fastening system 700. To achieve this secured, locked, or engaged configuration of the intermediate component 730 between the first and second components 702, 704 shown in FIG. 7B, the fastening system 700 can include a driving unit 716. The driving unit 716 can include a motor assembly, for example, including a motor 720. The motor 720 is configured to translate and rotate the first fastener 710 in cooperation with a guide 722 that directs (e.g., aims) such motion. The motor 720 may include any type of device configured to cause motion of the first fastener 710, such as a solenoid, a linear actuator, or a rotary motor. The motor 720 can operate based on signals provided from a controller and an electrical connection to the controller. The motor 720 may be a single motor configured to drive translation (e.g., extension or retraction) and rotation of the first fastener 710 or dual motors, one for extension and one for retraction or one for translation and one for rotation. In the example of FIGS. 7A and 7B, the driving unit 716 may include gears to convert rotational motion of the motor 720 to linear and rotational motion of the first fastener 710. For example, the motor 720 may rotate in a single direction to move the first fastener 710 between the first and second configurations of the first fastener 710. For example, the driving unit 716 can operate in a similar manner to the driving units 116, 216, 217, 416, 516, 517, 616 described herein.

The guide 722 may include a guide path for travel of a pin or a cam follower extending from the fastener body 714, a ball screw mechanism, a lead screw mechanism, reverse-threaded nuts, or any other mechanism that can be used to control a position of the first fastener 710 along and about the axis F and with respect to the guide 722 in cooperation with translation effected by the motor 720. That is, the guide 722 can be configured to direct or aim the fastener body 714 by enforcing a predetermined sequence of translation and rotation, for example, a pattern and a speed, through which and at which the first fastener 710 will translate and rotate.

To move the first fastener 710 between the first configuration shown in FIG. 7A and the second configuration shown in FIG. 7B, the driving unit 716 can cause the first fastener head 712 to first extend or translate in a first direction (e.g., left) along the axis F that extends through the first fastener body 714. After the first fastener 710 translates through the first and third openings 706, 732, the first fastener head 712 can rotate about the axis F (e.g., right or left approximately ninety degrees) when positioned within the interior of the intermediate component 730. In a next optional step, the motor 720 can retract the first fastener 710, e.g., translate the first fastener 710 in a second direction opposite the first direction (e.g., right) along the axis F. In this manner, the first fastener head 712 may be turned or rotated when the first fastener head 712 is positioned within an interior of the intermediate component 730 before being retracted by the driving unit 716 to engage the inner surface of the first fastener head 712 with the inner surface of the intermediate component 730 to securely couple the first component 702 and the intermediate component 730.

Motion of the second fastener 711 in the example of FIGS. 7A and 7B can be directed using a guide 752 and a spring 754 configured to apply force to the second fastener body 715. The spring 754 can couple the second fastener body 715 to the guide 754 as shown or may act between such components without a direct coupling. The spring 754 can exert or apply force against the second fastener body 715 to position the second fastener head 713 within the second opening 708 in the first configuration of the second fastener 711 shown in FIG. 7A. The spring 754 may have a spring constant sufficient to maintain a position of the second fastener head 713 as inset within the second opening 708 under casual contact, for example, should a user attempt to press or push the second fastener head 713.

The spring 754 is configured to be compressed when the intermediate fastener head 760 abuts the second fastener head 713 as shown in FIG. 7B. In other words, the spring 754 is configured to exert or apply force to the second fastener body 715 and to engage the second fastener head 713 against the intermediate fastener head 760 in the second configuration of the second fastener 711 in response to the intermediate fastener head 760 engaging, abutting, or otherwise pressing against the second fastener head 713 to compress the spring 754 in the second configuration of the intermediate fastener 758. The spring constant of the spring 754 may be such that only a predetermined force, the force exerted by the intermediate fastener head 760 against the second fastener head 713, is sufficient to compress the spring 754 within the guide 752.

Motion of the intermediate fastener 758 in the example of FIGS. 7A and 7B can be directed using a mechanical latch or release. For example, a user could flip a switch, pull a cable, press a button, or otherwise cause the intermediate fastener 758 to rotate approximately 90 degrees, such as 80 degrees or 100 degrees, about the axis F to move the intermediate fastener head 760 from the first configuration or position shown in FIG. 7A to the second configuration or position shown in FIG. 7B. In another example, if a user aligns the intermediate component 730 between the first component 702 and the second component 704, such as using positioning rails, the first fastener 710 and the intermediate fastener 758 may be configured to automatically move from the first configurations of FIG. 7A to the second configurations of FIG. 7B based on recognition (e.g., by sensors and/or a controller) of such alignment. Automatic engagement or securing of the intermediate component 730 can be useful when the fastening interfaces are hidden or blind as is true in the fastening system 700 of FIGS. 7A and 7B.

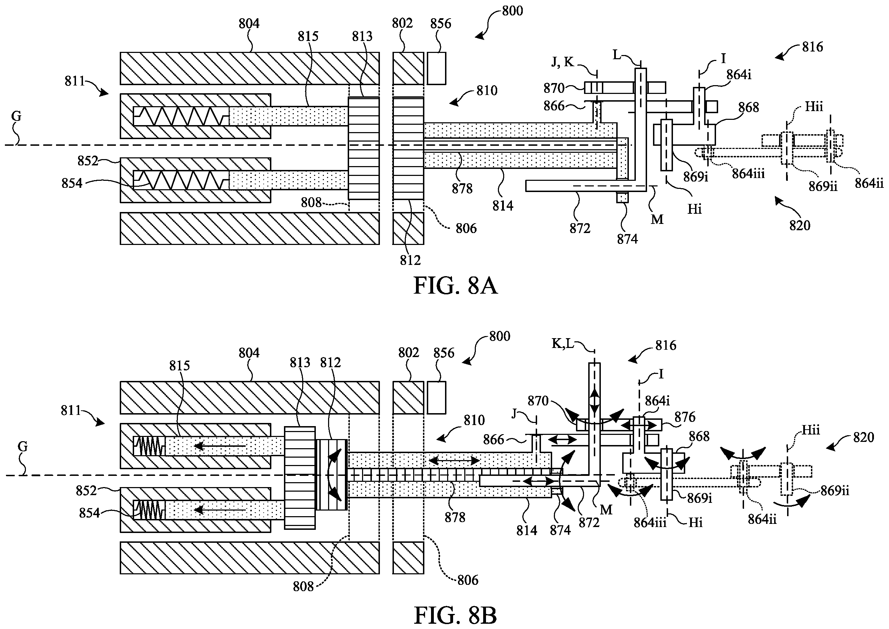

FIGS. 8A and 8B show side sectionals views of an embodiment of a fastening system 800 in a stowed configuration in FIG. 8A and in an extended configuration in FIG. 8B. The fastening system 800 is similar to the fastening systems 100, 200, 300, 400, 500, 600, 700 of FIGS. 1A to 7B. The fastening system 800 may be used with a first component 802. In some examples, the fastening system 800 may be used to secure the first component 802 and a second component 804. The first component 802 may include a surface of a door or door opening, a bed or bed opening, a hatch or hatch opening, a storage container or storage container opening, a trailer or trailer opening, or another component or another component opening. The second component 804 may include a corresponding surface of a door or door opening, a bed or bed opening, a hatch or hatch opening, a storage container or storage container opening, a trailer or trailer opening, or another component or another component opening. The first component 802 includes a first opening 806 in the relevant surface, and the second component 804 includes a second opening 808 in the corresponding relevant surface.

The fastening system 800 includes a first fastener 810 having a first fastener head 812 disposed at a distal end of a first fastener body 814. The fastening system 800 may include a second fastener 811 having a second fastener head 813 disposed at a distal end of a second fastener body 815. The first opening 806, the second opening 808, the first fastener head 812, and the second fastener head 813 may have corresponding elongated shapes. For example, in the first position or stowed configuration shown in FIG. 8A, the first fastener head 812 is inset within the first opening 806 and the second fastener head 813 is inset within the second opening 808. The first fastener head 812 is sized and shaped to pass through the first opening 806, pass through the second opening 808, and abut the second fastener head 813. Though shown with elongated shapes, the first fastener head 812 and the second fastener head 813 may include corresponding oblong, square, triangular, trapezoidal, or other shapes. In some examples, the second fastener 811 may be absent.

The first fastener head 812 is sized and shaped to pass through the first opening 806 and the second opening 808 in an unobstructed manner when the first and second openings 806, 808 are generally aligned with respect to a fastener axis G that extends horizontally through a central portion of the first fastener body 814 and, optionally, horizontally through a central portion of the second fastener body 815. In other words, the fastener axis G will also extend through central portions of the first opening 806 and the second opening 808 when the first component 802 and the second component 804 are positioned in a manner conducive for fastening with the fastening system 800, such as when a user closes or otherwise aligns a door with a door opening, a tailgate with a bed opening, a storage container with a storage container opening, a trailer with a trailer opening, or a liftgate with a hatch opening. The fastener axis G is indicated to serve as a reference to describe movement of the first fastener 810 and, optionally, the second fastener 811 between the configurations or positions shown in FIGS. 8A and 8B.

In the stowed configuration shown in FIG. 8A, the first fastener head 812 is inset within the first opening 806 of the first component 802 and positioned in a first orientation with respect to the fastener axis G. The first orientation of the first fastener head 812 about the fastener axis G is such that an elongated portion of the first fastener head 812 extends vertically within the first opening 806 as shown in FIG. 8A. The first opening 806 may have an elongated shape similar to the elongated shape of the first fastener head 812 such that an outer edge of the first opening 806 surrounds an outer edge of the first fastener head 812. The second fastener 811 also has a stowed configuration shown in FIG. 8A with the second fastener head 813 inset within the second opening 808 of the second component 804. The second fastener head 813 and the second opening 808 may also have similar, elongated shapes.

An outer surface of the first fastener head 812 may be flush or near flush with an outer surface of the first component 802 in the stowed configuration of FIG. 8A. When present, an outer surface of the second fastener head 813 may be flush or near flush with an outer surface of the second component 804. The flush or near flush condition may include the outer surfaces of the first and second fastener heads 812, 813 and the first and second components 802, 804 extending along respective common planes as shown or may include the outer surfaces of the first and second fastener heads 812, 813 being slightly under-flush or slightly proud with respect to the respective outer surfaces of the first and second components 802, 804.

The first fastener 810 has an extended configuration shown in FIG. 8B. With respect to the stowed configuration of the first fastener 810 shown in FIG. 8A, the first fastener 810 has translated along the fastener axis G such that the first fastener body 814 extends through the first opening 806 in the first component 802 and through the second opening 808 in the second component 804. Such translation of the first fastener 810 along the fastener axis G is shown with a horizontal, left-right arrow on the fastener axis G in FIG. 8B. In the extended configuration of the first fastener 810, the first fastener head 812 is disposed exterior to the first component 802 and positioned in a second orientation that is rotationally spaced about the fastener axis G with respect to the first orientation shown in FIG. 8A. The rotational spacing between the first and second orientations of the first fastener 810 may be 45 degrees, 60 degrees, 75 degrees, 90 degrees, 105 degrees, or another angular value. Turning of the first fastener head 812 is represented by the curved arrow shown at a location of the first fastener head 812 in FIG. 8B. In other words, in the extended configuration, the first fastener head 812 is both proud of the first component 802 and rotated about the fastener axis G with respect to the stowed configuration of FIG. 8A.

In examples where the fastening system 800 includes the second component 804, an inner surface of the first fastener head 812 may engage with an inner surface of the second component 804 (e.g., adjacent to the second opening 808) to secure the second component 804 to the first component 802 when the first fastener 810 is in the extended configuration. In other words, when the first fastener head 812 moves to the second orientation as shown in FIG. 8B, an inner surface of the first fastener head 812 may be in direct contact with an inner surface of the second component 804 such that the first component 802 and the second component 804 are coupled together by such contact between the first fastener head 812 and the inner surface of the second component 804.

In examples where the fastening system 800 includes the second fastener 811, the second fastener 811 can be moved from the stowed configuration shown in FIG. 8A to a depressed configuration shown in FIG. 8B. With respect to the stowed configuration of the second fastener 811 shown in FIG. 8A, the second fastener 811 has translated along the fastener axis G such that the second fastener head 813 is disposed within an interior of the second component 804 in the depressed configuration. An outer surface of the second fastener head 813 also abuts an outer surface of the first fastener head 812. Such translation of the second fastener 811 along the fastener axis G is shown with a pair of horizontal, left-facing arrows at a location of the second fastener body 815 in FIG. 8B.

To achieve the extended configuration of the first fastener 810 and the optional depressed configuration of the second fastener 811 shown in FIG. 8B, the fastening system 800 can include a driving unit 816. The driving unit 816 is configured to cause both translation and rotation of the first fastener 810. To effect translation, the driving unit 816 includes a motor assembly 820, a pin 864i, and a slider 866 that when actuated are configured to impart a force against the first fastener body 814 to translate the first fastener body 814 along the fastener axis G, such that the first fastener 810 translates between the stowed configuration shown in FIG. 8A and the extended configuration shown in FIG. 8B.

The motor assembly 820 may include any type of device configured to cause motion, such as a solenoid, a linear actuator, a rotary motor, or reciprocating links driven by a rotary motor that rotates in a single direction. The motor assembly 820 can operate based on signals provided from a controller and an electrical connection to the controller. The motor assembly 820 may be a single motor configured to drive translation (e.g., extension or retraction) and rotation of the first fastener 810 or dual motors, one for extension and one for retraction or one for translation and one for rotation in cooperation with other components of the driving unit 816.

The pin 864i may be a mechanical feature (e.g., a protrusion, a nub, an extension, etc.) that is configured to rotate about a drive axis Hi of the motor assembly 820. In the example of FIGS. 8A and 8B, the drive axis Hi is perpendicular to the fastener axis G. In some examples, the pin 864i may be supported by a crank 868 that rotates about the drive axis Hi based on rotation of a drive shaft 869i. In some examples, the drive shaft 869i is directly driven by the motor assembly 820 to rotate the crank 868. In other examples, the drive shaft 869i is driven to rotate the crank 868 by a series of reciprocating links coupled by optional pins 864ii, 864iii (shown in dotted line) that are configured to rotate about optional drive axis Hii (shown in dotted line) based on a single direction of rotation of optional drive shaft 869ii as is shown in FIG. 8B (e.g., the optional drive shaft 869ii may rotate only clockwise or only counter clockwise). In other words, the optional pins 864ii, 864iii, the optional links, and the optional drive shaft 869ii shown in dotted line allow for use of a single motor in the motor assembly 820 with continuous, one direction rotation.

The pin 864i and the optional pin 864iii may protrude from the crank 868 at locations radially spaced from the drive axis Hi. Though shown as integrally coupled with the crank 868, the pin 864i and the optional pin 864iii may be separate components from the crank 868. The motor assembly 820, the pin 864i and the optional pins 864ii, 864iii and links, the crank 868, and the drive shaft 869i and the optional drive shaft 869ii may be formed from or include materials such as metal, composite, polymer, or combinations thereof and may be configured to withstand repeated rotations. The motor assembly 820 may include components such as lubricants to reduce friction during rotation.

The slider 866 may be a rigid or semi-rigid, elongated linkage, formed from materials such as metals, composites, rubbers, polymers, or combinations thereof. The slider 866 has a first end coupled to the pin 864. Through the coupling, the first end of the slider 866 is rotatable about a pin axis I of the pin 864. In the examples of FIGS. 8A and 8B, the pin 864 extends through an opening in the first end of the slider 866. The slider 866 has a second end coupled to a proximal end of the first fastener body 814. Through the coupling, the second end of the slider 866 is rotatable about a fastener axis J. In the examples of FIGS. 8A and 8B, a protrusion extends from the first fastener body 814 along the fastener axis J and through an opening in the second end of the slider 866 to show a location of the coupling. The rotational connection may be achieved using other components, such as a pivot or bearing. The slider 866 is thus configured to translate (left or right) based on a rotational (and radial) position of the pin 864 with respect to the drive axis H as is shown by the left-right arrow on a body of the slider 866 in FIG. 8B.

The pin 864, the crank 868 that supports the pin 864, and the slider 866 can together convert rotational motion of the motor assembly 820 to linear motion of the first fastener 810 along the fastener axis G. For example, when the motor assembly 820 is actuated, the crank 868 and the pin 864 rotate about the drive axis H, causing the slider 866 to translate (either left or right) and impart a force against the first fastener body 814 that in turn translates (correspondingly left or right) the first fastener body 814 along the fastener axis G that extends perpendicular to the drive axis H. A direction of translation of the first fastener body 814 along the fastener axis G is based on a rotational position of the crank 868 and a radial position of the pin 864 about the drive axis H. In other words, both the slider 866 and the first fastener body 814 may translate left or away from the driving unit 816 or right or toward the driving unit 816 depending on a position of the pin 864 with respect to (i.e., about) the drive axis H. In this way, the motor assembly 820 may cause both extension and retraction of the first fastener 810 away from and toward the first opening 806 in the first component 802. Any friction that occurs at various rotational couplings between the first fastener body 814, the pin 864, and the slider 866 may be reduced using additional components, such as roller bearings or lubricants.

While the crank 868, the slider 866, and the pin 864 can cause translation of the first fastener body 814, the driving unit 816 includes additional components to cause rotation of the first fastener head 812. For example, the driving unit 816 includes the motor assembly 820, the pin 864, a wheel 870, and a link 872. The link 872 has a first end coupled to the wheel 870 and a second end coupled to a fastener arm 874 rotatably coupled to a proximal end of the first fastener body 814.

The wheel 870 is configured to rotate about a wheel axis K that is spaced from and extends parallel to the drive axis H associated with the motor assembly 820. The wheel 870 may be rotationally anchored to a component separate from the driving unit 816, such as a housing that surrounds the first fastener 810. Though only a single spoke or arm of the wheel 870 is shown in each of the FIGS. 8A and 8B when the wheel 870 is at different rotational positions about the wheel axis K, it is understood that the wheel 870 may have multiple spokes and/or slots, for example, forming a complete or partial Geneva wheel to support interaction with the pin 864. As shown in FIG. 8B, the wheel defines a slot 876 configured to guide motion of the pin 864.

The wheel 870 can control timing of rotation of the first fastener head 812. For example, the wheel 870 is configured to rotate about the wheel axis K when the pin 864 engages an end of the slot 876 as shown in FIG. 8B. The wheel 870 is configured to be stationary when the pin 864 travels into or out of the slot 876 or is positioned exterior to the slot 876 as shown in FIG. 8A. In other words, the motor assembly 820 rotates the crank 868 and the pin 864 about the drive axis H as is shown by the curved arrow about the drive axis H in FIG. 8B, then the pin 864 moves into and out of the slot 876 in the wheel 870 as shown by the left-right arrow on the pin 864 in FIG. 8B. When the pin 864 engages with an end of the slot 876, the wheel 870 rotates about the wheel axis K as is shown by the curved arrow about the wheel axis K in FIG. 8B. Moving between the positions of the wheel 870 in FIG. 8A and 8B includes rotating the wheel 870 a predetermined amount, such as 30 degrees, 45 degrees, 60 degrees, 75 degrees, or 90 degrees.

Rotational motion of the wheel 870 and translational motion of the slider 866 can cause translational motion of the link 872 in two directions. The link 872 has an L-shape and is configured for motion both vertically (up-down) with respect to the wheel 870 and horizontally (left-right) with respect to the fastener arm 874 at the proximal end of the first fastener body 814. For example, the wheel 870 defines an opening through which the link 872 is guided up and down along a link axis L that extends parallel to the drive axis H as is shown by the up-down arrow on the link axis L in FIG. 8B. The fastener arm 874 at the proximal end of the first fastener body 814 defines another opening through which the link 872 is guided left and right along another link axis M that extends parallel to the fastener axis G as is shown by the left-right arrow on the link axis M in FIG. 8B. Comparing positions between FIGS. 8A and 8B, the link 872 has moved up along the vertical link axis L and has moved left along the horizontal link axis M in FIG. 8B as compared to FIG. 8A.

When the wheel 870 rotates and the link 872 moves between the position shown in FIG. 8A and the position shown in FIG. 8B, the link 872 imparts a torque against the fastener arm 874, which imparts a torque to an interior portion 878 of the first fastener body 814. This torque rotates the interior portion 878 of the first fastener body 814 about the fastener axis G, in turn rotating the first fastener head 812 between the first orientation shown in FIG. 8A and the second orientation shown in FIG. 8B. That is, the first fastener head 812 at the distal end of the first fastener body 814 is coupled to the interior portion 878 of the first fastener body 814 which is coupled to the fastener arm 874 at the proximal end of the first fastener body 814. The first fastener head 812, the interior portion 878, and the fastener arm 874 are thus together rotatable with respect to the remainder of the first fastener body 814. The first fastener head 812, the interior portion 878, and the fastener arm 874 may be separate and coupled or integrated components.

In operation of the fastening system 800, once the first fastener 810 translates in a first direction (e.g., left) through the first and second openings 806, 808 as caused by rotation of the pin 864 and translation of the slider 866, the first fastener head 812 will rotate about the fastener axis G (e.g., right or left approximately ninety degrees) when positioned within the interior of the second component 804 as caused by rotation of the wheel 870, translation of the link 872, and rotation of the fastener arm 874 and the interior portion 878 of the first fastener body 814. In a next, optional step, and based on further rotation of the pin 864 and translation the slider 866, the first fastener 810 can be retracted, that is, the first fastener 810 can translate in a second direction opposite the first direction (e.g., right) along the fastener axis G. In this manner, the first fastener head 812 may be turned or rotated when the first fastener head 812 is positioned within an interior of the second component 804 before being retracted by the driving unit 816 to engage the inner surface of the first fastener head 812 with the inner surface of the second component 804 to securely couple the first component 802 and the second component 804.

Motion of the second fastener 811 in the example of FIGS. 8A and 8B can be directed using a guide 852 and a spring 854 configured to apply force to the second fastener body 815. The spring 854 can couple the second fastener body 815 to the guide 854 as shown or may act between such components without a direct coupling. The spring 854 can exert or apply force against the second fastener body 815 to position the second fastener head 813 within the second opening 808 in the stowed configuration of the second fastener 811 shown in FIG. 8A. The spring 854 may have a spring constant sufficient to maintain a position of the second fastener head 813 as inset within the second opening 808 under casual contact, for example, should a user attempt to press or push the second fastener head 813.

The spring 854 is configured to be compressed when the first fastener head 812 abuts the second fastener head 813 as shown in FIG. 8B. In other words, the spring 854 is configured to exert or apply force to the second fastener body 815 and to engage the second fastener head 813 against the first fastener head 812 in the depressed configuration of the second fastener 811 in response to the first fastener head 812 engaging, abutting, or otherwise pressing against the second fastener head 813 to compress the spring 854 in the extended configuration of the first fastener 810. In some embodiments, use of the guide 852 and the spring 854 can replace the use of retraction of the first fastener 810 using the driving unit 816 to effect coupling of the first and second components 802, 804. The spring constant of the spring 854 may be such that only a predetermined force, the force exerted by the first fastener head 812 against the second fastener head 813, is sufficient to compress the spring 854 within the guide 852.

In some embodiments, the fastening system 800 can include a sensor 856, such as a Hall effect sensor, within or proximate to a surface of the first component 802 or otherwise nearby or adjacent to the first opening 806. The sensor 856 can identify interference of magnetic fields, for example, a magnetic field of the second fastener 811 or the second component 804 and a magnetic field of the first fastener 810 or the first component 802. When such magnetic fields or interference of magnetic fields is detected, indicating a sufficient proximity of the first and second components 802, 804, the fastening system 800 can be configured to automatically begin the latching or locking sequence. For example, if a user rotates or positions the second component 804 (e.g., a tailgate) for engagement with the first component 802 (e.g., a tailgate opening), the sensor 856 can detect proximity or interference of magnetic fields, and the sensor 856 can send signals to a controller to activate the fastening system 800.

With the first and second fastener heads 812, 813 inset within the first and second openings 806, 808, and the spring 854 and the driving unit 816 holding positions of the first and second fastener heads 812, 813 in the stowed configuration of FIG. 8A, a user of the fastening system 800 may not be able to determine which of the first and second components 802, 804 includes active components and which of the first and second components 802, 804 includes passive components. In other words, function of the fastening system 800 may be both automated and hidden. This hidden or concealed nature of the components of the fastening system 800 is desirable both for unobtrusive design and security.

The fastening system 800 may be able to control unlocking, unlatching, or releasing of the first fastener 810 from the second component 804 by reversing the process described. For example, the first fastener head 812 may be moved further into the interior of the second component 804 than is shown in FIG. 8B to avoid friction between the first fastener head 812 and an interior surface of the second component 804, then rotated around the fastener axis G to align the elongated shape of the first fastener head 812 with the first and second openings 806, 808, then retracted, for example, using the driving unit 816, so that the first fastener head 812 travels back through the second opening 808 and returns to a position inset within the first opening 806 as is shown in FIG. 8A. The fastening system 800 is thus able to be engaged and disengaged in a blind or concealed fashion.

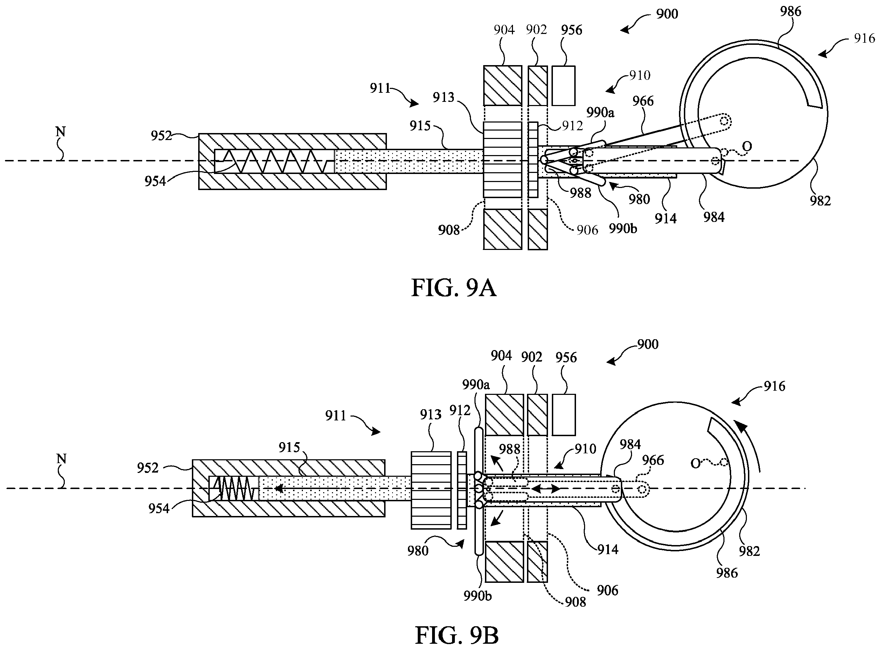

FIGS. 9A and 9B are top sectional illustrations of another embodiment of a concealed fastening system 900 in a collapsed configuration in FIG. 9A and a locked configuration in FIG. 9B. The fastening system 900 is similar to the fastening systems 100, 200, 300, 400, 500, 600, 700, 800 of FIGS. 1A to 8B. The fastening system 900 may be used with a first component 902. In some examples, the fastening system 900 may be used to secure the first component 902 and a second component 904. The first component 902 may include a surface of a door or door opening, a bed or bed opening, a hatch or hatch opening, a storage container or storage container opening, a trailer or trailer opening, or another component or another component opening. The second component 904 may include a corresponding surface of a door or door opening, a bed or bed opening, a hatch or hatch opening, a storage container or storage container opening, a trailer or trailer opening, or another component or another component opening. The first component 902 includes a first opening 906 in the relevant surface, and the second component 904 includes a second opening 908 in the corresponding relevant surface.

The fastening system 900 includes a first fastener 910 having a first fastener head 912 disposed at a distal end of a first fastener body 914. The fastening system 900 may include a second fastener 911 having a second fastener head 913 disposed at a distal end of a second fastener body 915. The first opening 906, the second opening 908, the first fastener head 912, and the second fastener head 913 may have corresponding shapes, such as round or elongated. Other corresponding shapes are possible. In the first position or collapsed configuration shown in FIG. 9A, the first fastener head 912 is inset within the first opening 906 and the second fastener head 913 is inset within the second opening 908. The first fastener head 912 is sized and shaped to pass through the first opening 906, pass through the second opening 908, and abut the second fastener head 913. Though shown with round shapes, the first fastener head 912 and the second fastener head 913 may include corresponding oblong, square, triangular, trapezoidal, or other shapes. In some examples, the second fastener 911 may be absent.

The first fastener head 912 is sized and shaped to pass through the first opening 906 and the second opening 908 in an unobstructed manner when the first and second openings 906, 908 are generally aligned with respect to a fastener axis N that extends horizontally through a central portion of the first fastener body 914 and, optionally, horizontally through a central portion of the second fastener body 915. In other words, the fastener axis N will also extend through central portions of the first opening 906 and the second opening 908 when the first component 902 and the second component 904 are positioned in a manner conducive for fastening with the fastening system 900, such as when a user closes or otherwise aligns a door with a door opening, a tailgate with a bed opening, a storage container with a storage container opening, a trailer with a trailer opening, or a liftgate with a hatch opening. The fastener axis N is indicated to serve as a reference to describe movement of the first fastener 910 and, optionally, the second fastener 911 between the configurations or positions shown in FIGS. 9A and 9B.

In the collapsed configuration shown in FIG. 9A, the first fastener head 912 is inset within the first opening 906 of the first component 902. The first opening 906 may have a round shape similar to the round shape of the first fastener head 912 such that an outer edge of the first opening 906 surrounds an outer edge of the first fastener head 912. The second fastener 911 has a stowed configuration shown in FIG. 9A with the second fastener head 913 inset within the second opening 908 of the second component 904. The second fastener head 913 and the second opening 908 may also have similar, round shapes.

An outer surface of the first fastener head 912 may be flush or near flush with an outer surface of the first component 802 in the collapsed configuration of FIG. 9A. When present, an outer surface of the second fastener head 913 may be flush or near flush with an outer surface of the second component 904 in the stowed configuration. The flush or near flush condition may include the outer surfaces of the first and second fastener heads 912, 913 and the first and second components 902, 904 extending along respective common planes as shown or may include the outer surfaces of the first and second fastener heads 912, 913 being slightly under-flush or slightly proud with respect to the respective outer surfaces of the first and second components 902, 904.

The first fastener 910 has a locked configuration shown in FIG. 9B. With respect to the collapsed configuration of the first fastener 910 shown in FIG. 9A, the first fastener 910 has translated along the fastener axis N such that the first fastener body 914 extends through the first opening 906 in the first component 902 and through the second opening 908 in the second component 904. Such translation of the first fastener 910 along the fastener axis N is shown with a horizontal, left-right arrow on the fastener axis N in FIG. 9B. In the locked configuration of the first fastener 910, the first fastener head 912 is disposed exterior to the first component 902, and optionally, interior to the second component 904. In other words, in the locked configuration, the first fastener head 912 is proud of the first component 902 and interior to the second component 904.

In examples where the fastening system 900 includes the second fastener 911, the second fastener 911 can be moved from the stowed configuration shown in FIG. 9A to a depressed configuration shown in FIG. 9B. With respect to the stowed configuration of the second fastener 911 shown in FIG. 9A, the second fastener 911 has translated along the fastener axis N such that the second fastener head 913 is disposed within an interior of the second component 904 in the depressed configuration. An outer surface of the second fastener head 913 also abuts an outer surface of the first fastener head 912. Such translation of the second fastener 911 along the fastener axis N is shown with a horizontal, left-facing arrow at a location of the second fastener body 915 in FIG. 9B.

To achieve the locked configuration of the first fastener 910 and the optional depressed configuration of the second fastener 911 shown in FIG. 9B, the fastening system 900 can include a driving unit 916. The driving unit 916 is configured to cause translation of the first fastener 910 in both directions (left-right) along the fastener axis N and expansion and retraction of a lock 980 that is coupled to and extendable from the first fastener body 914.

To effect translation of the first fastener body 914, the driving unit 916 includes a drive block 982 that rotates about a drive axis O and is coupled to a slider 966 configured to impart a force against the first fastener body 914 to translate the first fastener body 914 along the fastener axis N. The drive axis O is generally perpendicular to the fastener axis N. Such force imparted by the slider 966 against the first fastener body 914 causes the first fastener 910 to translate between the collapsed configuration shown in FIG. 9A and the extended configuration shown in FIG. 9B.

The slider 966, hidden portions of which are shown in dotted line, may be a rigid or semi-rigid, elongated linkage, such as formed from materials including metals, composites, rubbers, polymers, or combinations thereof. The slider 966 has a first end coupled to and rotatable with respect to the drive block 982. The slider 966 has a second end coupled to and rotatable with respect to the first fastener body 914. Motion (here, both rotation and translation) of the slider 966 is driven by rotation of the drive block 982 about the drive axis O. In other words, when the drive block 982 rotates about the drive axis O, both ends of the slider 966 rotate, and the slider 966 imparts a force against the first fastener body 914 to translate the first fastener body 914 along the fastener axis N. The rotational connections between the slider 966 and the drive block 982 and the slider 966 and the first fastener body 914 may be achieved using additional components, such as pivots or bearings. The slider 966 is thus configured to rotate and translate based on a rotational position of the drive block 982 with respect to the drive axis O.

The drive block 982 may be rotated about the drive axis O by a motor that includes any type of device configured to cause motion, such as a solenoid, a linear actuator, a rotary motor, or reciprocating links driven by a rotary motor that rotates in a single direction (see, e.g., the motor assembly 820 of FIGS. 8A and 8B). The motor can operate to rotate the drive block 982 based on signals provided from a controller and an electrical connection to the controller. The motor may be a single motor configured to drive translation (e.g., extension or retraction) of the first fastener 910 or dual motors, one for extension and one for retraction or one for translation and one for rotation in cooperation with other components of the driving unit 916. The motor may rotate in a single direction to move the first fastener 910 between the collapsed and extended configurations. The motor may include components such as lubricants to reduce friction during rotation.

To effect expansion and retraction of the lock 980 in coordination with translation of the first fastener body 914, the driving unit 916 includes a lock arm 984 having a first end that traverses a drive block path 986 defined within the drive block 982 and an opposite, second end that traverses a lock arm path 988 defined within the first fastener body 914 along the fastener axis N. The drive block path 986 may be an opening within the drive block 982 that has an arcuate shape (e.g., a C-shape, a D-shape, or another, irregular curved shape). In some examples, the drive block 982 may include a protrusion having the arcuate shape that forms the drive block path 986 instead of or in addition to the opening within the drive block 982. The lock arm path 988 includes two generally straight, elongated openings within the first fastener body 914. Though two openings are shown, a single opening is also possible. The lock arm 984 is configured to traverse the lock arm path 988 to translate with respect to the first fastener body 914 as is indicated by the horizontal left-right arrow on the lock arm 984 in FIG. 9B.

The lock 980 has a first end coupled to the second end of the lock arm 984 and a second end coupled to the first fastener body 914. The second end of the lock 980 comprises links 990a,b that are coupled to each other, coupled to the first fastener body 914, and rotatable with respect to the first fastener body 914. The second end of the lock 980, specifically, the links 990a,b, are movable between the collapsed configuration of FIG. 9A where an angular distance between the links 990a,b may be approximately 30 degrees, 45 degrees, 60 degrees, or 90 degrees and the locked configuration of FIG. 9B where an angular distance between the links 990a,b may be approximately 170 degrees, 180 degrees, or 190 degrees. The shape of the drive block path 986, in this example, a C-shape or D-shape, can control a timing at which the links 990a,b of the lock 980 are expanded and retracted between the collapsed configuration of FIG. 9A and the locked configuration of FIG. 9B.

For example, when the drive block 982 rotates about the drive axis O, the first end of the lock arm 984 travels within the drive block path 986 and the second end of the lock arm 984 travels within the lock arm path 988. The second end of the lock arm 984 then imparts a force against the first end of the lock 980 to move the links 990a,b between the collapsed configuration of FIG. 9A and the locked configuration of FIG. 9B in which the links 990a,b extend in a manner generally perpendicular to the fastener axis N. The lock arm 984 may be a rigid or semi-rigid, elongated linkage, such as formed from metal, composite, rubber, polymer, or combinations thereof to withstand cycling.

When the lock 980 is in the collapsed configuration, the first fastener head 912 of the first fastener 910 is inset within the first opening 906 of the first component 902 and the links 990a,b are positioned within an interior of the first component 902 as is shown in FIG. 9A. The links 990a,b may be part of a multi-bar linkage (as shown). The multi-bar linkage of the lock 980 is coupled between the first fastener body 914 and the lock arm 984 in order to use limited packaging space while providing a precisely-timed repositioning (e.g., opening and closing) of the links 990a,b based on a position of the lock arm 984 with respect to both the drive block path 986 and the lock arm path 988. Repositioning of the links 990a,b may operate, for example, in a manner similar to opening and closing of an umbrella.

As shown in FIG. 9B, when the lock 980 is in the locked configuration, the first fastener body 914 extends through the first opening 906 in the first component 902 and through the second opening 908 in the second component 904, and the links 990a,b are engaged with an inner surface of the second component 904. In order for the links 990a,b to engage with the inner surface of the second component 904 as shown, the shape of the drive block 982 and the radial location at which the slider 966 is coupled to the drive block 982 are designed such that the first fastener body 914 retracts, that is, moves right along the fastener axis N after the links 990a,b are in the locked configuration. In other embodiments, such as when no second component 904 is present, when the lock 980 is in the locked configuration, the first fastener body 914 may extend through the first opening 906 in the first component and the links 990a,b may be engaged with an outer surface of the first component 902 using extension and retraction driven by the drive block 982 and the slider 966.

In operation of the fastening system 900, as the first fastener 910 translates in a first direction (e.g., left) through the first and second openings 906, 908 as caused by rotation of the drive block 982 in a counter-clockwise direction indicated with a curved arrow and rotation and translation of the slider 966, the links 990a,b of the lock 980 will move from the collapsed configuration of FIG. 9A to the locked configuration of FIG. 9B as shown by the opposed arrows in the second opening 908 of FIG. 9B and as caused by motion of the lock arm 984 within both the drive block path 986 and the lock arm path 988. In a next step, and based on further rotation of the drive block 982, the first fastener 910 can be retracted, that is, the first fastener 910 can translate in a second direction opposite the first direction (e.g., right) along the fastener axis N while the links 990a,b are in the locked configuration as shown in FIG. 9B. In other words, the links 990a,b become fully open or extended when within an interior of the second component 904 and remain so during retraction of the first fastener body 914 so that an inner surface of the links 990a,b engages with an inner surface of the second component 904 to securely couple the first component 902 and the second component 904.

Motion of the second fastener 911 in the example of FIGS. 9A and 9B can be directed using a guide 952 and a spring 954 configured to apply force to the second fastener body 915. The spring 954 can couple the second fastener body 915 to the guide 954 as shown or may act between such components without a direct coupling. The spring 954 can exert or apply force against the second fastener body 915 to position the second fastener head 913 within the second opening 908 in the stowed configuration of the second fastener 911 shown in FIG. 9A. The spring 954 may have a spring constant sufficient to maintain a position of the second fastener head 913 as inset within the second opening 908 under casual contact, for example, should a user attempt to press or push the second fastener head 913.

The spring 954 is configured to be compressed when the first fastener head 912 abuts the second fastener head 913 as shown in FIG. 9B. In other words, the spring 954 is configured to exert or apply force to the second fastener body 915 and to engage the second fastener head 913 against the first fastener head 912 in the depressed configuration of the second fastener 911 in response to the first fastener head 912 engaging, abutting, or otherwise pressing against the second fastener head 913 to compress the spring 954 in the extended, locked configuration of the first fastener 910. In some embodiments, use of the guide 952 and the spring 954 can replace the use of retraction of the first fastener 910 using the driving unit 916 to effect coupling of the first and second components 902, 904. The spring constant of the spring 954 may be such that only a predetermined force, the force exerted by the first fastener head 912 against the second fastener head 913, is sufficient to compress the spring 954 within the guide 952.

In some embodiments, the fastening system 900 can include a sensor 956, such as a Hall effect sensor, within or proximate to a surface of the first component 902 or otherwise nearby or adjacent to the first opening 906. The sensor 956 can identify interference of magnetic fields, for example, a magnetic field of the second fastener 911 or the second component 904 and a magnetic field of the first fastener 910 or the first component 902. When such magnetic fields or interference of magnetic fields is detected, indicating a sufficient proximity of the first and second components 902, 904, the fastening system 900 can be configured to automatically begin the latching or locking sequence. For example, if a user rotates or positions the second component 804 (e.g., a door or a tailgate) for engagement with the first component 902 (e.g., a door opening or a tailgate opening), the sensor 956 can detect proximity or interference of magnetic fields, and the sensor 956 can send signals to a controller to activate the fastening system 900.

With the first and second fastener heads 912, 913 inset within the first and second openings 906, 908, and the spring 954 and the driving unit 916 holding positions of the first and second fastener heads 912, 913 in the stowed or collapsed configuration of FIG. 9A, a user of the fastening system 900 may not be able to determine which of the first and second components 902, 904 includes active components and which of the first and second components 902, 904 includes passive components. In other words, function of the fastening system 900 may be both automated and hidden. This hidden or concealed nature of the components of the fastening system 900 is desirable both for unobtrusive design and security.

The fastening system 900 may be able to control unlocking, unlatching, or releasing of the first fastener 910 from the second component 904 by reversing the process described. For example, the first fastener head 912 may be moved further into the interior of the second component 904 than is shown in FIG. 9B to allow the links 990a,b to begin motion to collapse before the first fastener body 914 is retracted, for example, using the driving unit 916, so that the first fastener head 912 travels back through the second opening 908 and returns to a position inset within the first opening 906 with the links 990a,b achieving the collapsed position as is shown in FIG. 9A. The fastening system 900 is thus able to be engaged and disengaged in a blind or concealed fashion.

The fastening systems 800, 900 of FIGS. 8A to 9B are concealed from user view, tightly packaged, and able to withstand many cycles with low frictional impact between the various moving components. The driving units 816, 916 operate a single motor or actuator, such as the motor assembly 820, with motion in a single degree of freedom (e.g., rotation) to cause motion in two degrees of freedom (e.g., rotation and translation). Motion in the two degrees of freedom is precisely timed by the arrangement of the components within the fastening systems 800, 900 so that engagement of the first fasteners 810, 910 with the second components 804, 904 is efficiently accomplished.

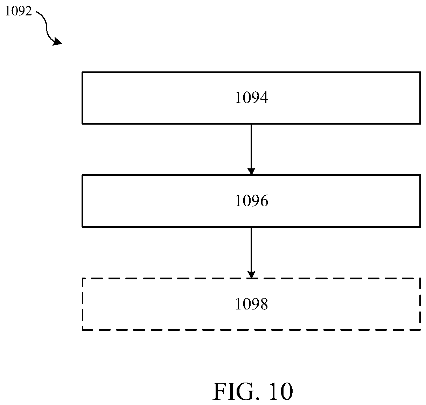

FIG. 10 is a method 1092 of securing a first component, such as the first components 102, 202, 402, 502, 602, 702, 802, 902 having a first opening, such as the first openings 106, 206, 406, 506, 606, 706, 806, 906 to a second component, such as the second components 104, 204, 304, 404, 604, 704, 804, 904 or the intermediate component 530, 730, having a second opening, such as the second openings 108, 208, 308, 408, 608, 708, 808, 908 or the third openings 532, 732, using one or more of the fastening systems 100, 200, 300, 400, 500, 600, 700, 800, 900 of FIGS. 1A to 9B. It is understood that the method 1092 may be used with various ones of the fastening systems 100, 200, 300, 400, 500, 600, 700, 800, 900, so individual elements of the fastening systems 100, 200, 300, 400, 500, 600, 700, 800, 900 will not be numbered throughout the description of the method 1092 unless required for clarity.

The method 1092 includes a step 1094 of moving a fastener having a fastener head disposed at an end of a fastener body from a first position where the fastener head is aligned or inset within the first opening of the first component to a second position spaced from the first position along an axis that extends through the first and second openings. In the second position, the fastener body extends through the first opening in the first component and through the second opening in the second component such that the fastener head moves from the inset position within the first opening of the first component to a position proud of a surface of the first component, proud of a surface of the second component, and/or within an interior of the second component.

The step 1094 of moving can be implemented using a driving unit, such as the driving units 116, 216, 217, 416, 516, 517, 616, 716, 816, 916. The driving unit can have a motor assembly, for example, including one or more motors such as the motors 120, 220, 221, 420, 520, 521, 620, 720, or the motor assembly 820 that may operate in a reversible or non-reversible manner. The driving unit can have one or more guides, sliders, or links such as the guides 122, 222, 223, 422, 522, 523, 622, 722, the sliders 866, 966, or the links 872, 990a,b that are configured to cause motion along and, optionally, about an axis that extends through the first and second openings. A motor can be configured to cause rotation of a drive axis while a guide or slider (or multiple guides or sliders) can be configured to direct (e.g., aim, cause, and/or guide) translation and rotation of a fastener, and thus, a fastener head or lock, between first, second, and optional third positions. For example, the guide can define a guide path for travel of a pin or a cam follower extending from a fastener body. In another example, the guide can include at least one of a ball screw mechanism, a lead screw mechanism, or a reverse-threaded nut mechanism. In another example, the guide can take the form of a slider that imparts force to cause translation or a wheel that rotates to cause rotation.

The method 1092 includes a step 1096 or rotating the fastener about the axis while the fastener is in the second position or deploying a lock while the fastener translates. The rotating may include rotating the fastener head approximately ninety degrees, such as 80 degrees or 100 degrees. The rotation of the fastener head can create an overlap condition between a surface of the fastener head and a surface of the first or second component with respect to the axis. In other words, when the first opening, the second opening, and the fastener head have corresponding shapes, such as elongated shapes, the fastener head is sized and shaped (in the first position) to pass through the first opening and the second opening. But, when the fastener head is rotated to the second position, a surface of the fastener head may be secured against a surface of the second component based on interference between the surfaces (see, e.g., FIGS. 1C, 1D, 2B, 2C, 3B, 5B, 6B, 7B, 8B) to effect coupling. Deploying a lock (see, e.g., FIG. 9B) can also create an overlap condition between surfaces.

The method 1092 includes an optional step 1098 of moving the fastener from the second position to a third position between the first and second positions along the axis. In the third position, an inner surface of the fastener head (or lock) engages with an inner surface of the second component to secure an outer surface of the second component to an outer surface of the first component. The optional step 1098 of moving can be implemented using the driving unit to retract the fastener to the third position between the first and second positions. In some embodiments, a seal can be compressed between an inner surface of the fastener head and the inner surface of the second component when the fastener is in the third position. In some embodiments, first and second openings of first and second components may be aligned with respect to the axis. In other embodiments, the first and second openings may be slightly offset without impacting use of the fastening system.

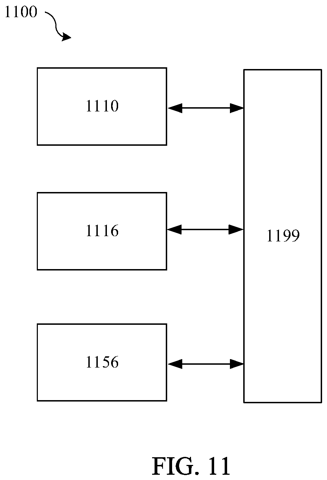

FIG. 11 is an illustration of a fastening system 1100. The fastening system 1100 can be similar to the fastening systems 100, 200, 300, 400, 500, 600, 700, 800, 900 of FIGS. 1A to 9B. The fastening system 1100 can include a fastener 1110, such as the fasteners 110, 210, 211, 410, 510, 511, 610, 611, 710, 711, 758, 810, 811, 910, 911 of FIGS. 1A to 9B. The fastening system 1100 can include a driving unit 1116, such as the driving units 116, 216, 217, 416, 417, 516, 517, 616, 716, 816, 916 of FIGS. 1A to 9B, that is configured to move, e.g., translate and optionally rotate, the fastener 1110. The fastening system 1100 can include a sensor 1156, such as the sensors 656, 856, 956 of FIGS. 6A to 6B and FIGS. 8A to 9B, that is configured to detect a proximity or a state of the fastener 1110, such as presence of a latched or unlatched condition of the fastener 1110. The fastening system 1100 can include a controller 1199. The controller 1199 can be used to implement the driving unit 1116, communicate with the sensor 1156, and/or control other portions of the fastening system 1100.

The controller 1199 may be useful, for example, when the fastening system 1100 includes electro-mechanical features such as the driving unit 1116 and/or the sensor 1156. In this example, the controller 1199 can include a processor, a memory device, a storage device, one or more input devices, and one or more output devices. These components may be interconnected by hardware such as a bus that allows communication between the components.

The processor may be a conventional device such as a central processing unit and is operable to execute computer program instructions and perform operations described by the computer program instructions. The memory device may be a volatile, high-speed, short-term information storage device such as a random-access memory module. The storage device may be a non-volatile information storage device such as a hard drive or a solid-state drive. The input devices may include any type of human-machine interface, such as buttons, lock-release mechanisms, switches, a keyboard, a mouse, a touchscreen input device, a gestural input device, or an audio input device serving as a user interface. The output devices may include any type of device operable to send commands associated with an operating mode, state, or configuration, changing such an operating mode, state, or configuration, or any type of device operable to provide an indication to a user regarding an operating mode, state, or configuration. For example, the output devices may include a display screen, an audio output, an actuator, or components of a lock-release mechanism.

As described above, one aspect of the present technology is the gathering and use of data available from various sources for use during operation of the fastening systems 100, 200, 300, 400, 500, 600, 700, 800, 900, 1100. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user-related information that allows adjustment of operation of the fastening systems 100, 200, 300, 400, 500, 600, 700, 800, 900, 1100 according to user preferences. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for use with the fastening systems 100, 200, 300, 400, 500, 600, 700, 800, 900, 1100, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, user-specific information may be determined each time the fastening systems 100, 200, 300, 400, 500, 600, 700, 800, 900, 1100 are used and without subsequently storing the information or associating the information with the particular user.

## Claims

1. A fastener for securing a first component to a second component, the fastener comprising: a fastener head disposed at a distal end of a fastener body,
wherein the fastener has a first configuration where the fastener head is inset within a first opening of the first component,
wherein the fastener has a second configuration where the fastener body extends through the first opening in the first component and through a second opening in the second component, and
wherein an inner surface of the fastener head engages with an inner surface of the second component to secure the second component to the first component in the second configuration.

2. The fastener of claim 1, further comprising:
a motor configured to translate and rotate the fastener along and about an axis extending through the fastener body to move the fastener between the first and second configurations.

3. The fastener of claim 2, wherein the motor rotates in a single direction to move the fastener between the first and second configurations.

4. The fastener of any of claims 1 to 3, wherein the fastener head is in a first orientation when the fastener is in the first configuration, and wherein the fastener head is in a second orientation that is rotated about an axis with respect to the first orientation when the fastener is in the second configuration.

5. The fastener of any of claims 1 to 4, further comprising:
a guide disposed radially about the fastener body; and
a pin extending from the fastener body and configured to follow the guide to move the fastener between the first and second configurations.

6. The fastener of any of claims 1 to 5, wherein the first opening, the second opening, and the fastener head have corresponding elongated shapes with the fastener head being sized to pass through the first opening and the second opening.

7. The fastener of any of claims 1 to 6, wherein an outer surface of the fastener head is flush with an outer surface of the first component in the first configuration.

8. The fastener of claim 7, wherein the inner surface of the fastener head is in direct contact with the inner surface of the second component in the second configuration.

9. The fastener of any of claims 1 to 8, wherein a seal is compressed between the inner surface of the fastener head and the inner surface of the second component in the second configuration.

10. The fastener of any of claims 1 to 9, wherein when the fastener is in the first configuration, the second opening is obscured by a cover of the second component, and wherein the cover is configured to allow the fastener to pass through the second opening when the fastener is in the second configuration.

11. A fastening system for securing first and second components having first and second openings, the fastening system comprising:
a first fastener having a first fastener head disposed at a distal end of a first fastener body,
wherein the first fastener has a first configuration where the first fastener head is inset within the first opening of the first component,
wherein the first fastener has a second configuration where the first fastener body extends through the first and second openings and an inner surface of the first fastener head engages with an inner surface of the second component to secure the first and second components;
a second fastener having a second fastener head disposed at a distal end of a second fastener body,
wherein the second fastener has a first configuration where the second fastener head is inset within the second opening of the second component,
wherein the second fastener has a second configuration where the second fastener head is disposed within an interior of the second component; and
a spring configured to apply force to the second fastener body to:
position the second fastener head within the second opening in the first configuration of the second fastener, and
engage the second fastener head against the first fastener head in the second configuration of the second fastener.

12. The fastening system of claim 11, wherein the first fastener head is configured to engage the second fastener head and compress the spring in the second configuration of the first fastener.

13. The fastening system of any of claims 11 to 12, wherein an outer surface of the second fastener head is flush with an outer surface of the second component in the first configuration of the second fastener.

14. The fastening system of any of claims 11 to 13, further comprising:
a motor configured to translate and rotate the first fastener along and about an axis extending through the first fastener body to move the first fastener between the first and second configurations of the first fastener.

15. The fastening system of claim 14, wherein the motor rotates in a single direction to move the first fastener between the first and second configurations of the first fastener.
